**Europäisches Patentamt**

**European Patent Office**

**Office européen des brevets**

(19)

(11) **EP 1 008 984 A2**

(12) **EUROPEAN PATENT APPLICATION**

(43) Date of publication:
**14.06.2000  Bulletin 2000/24**

(51) Int Cl.$^7$: **G10L 21/02**

(21) Application number: **99309902.7**

(22) Date of filing: **09.12.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **11.12.1998  JP  35334498**
**11.12.1998  JP  35334598**
**14.12.1998  JP  35483198**
**18.12.1998  JP  36171198**
**13.01.1999  JP  700199**

(71) Applicant: **SONY CORPORATION**
**Tokyo 141 (JP)**

(72) Inventors:
• **Mine, Takahiro, c/o Sony Corporation**
**Tokyo (JP)**
• **Araki, Takashi, c/o Sony Corporation**
**Tokyo (JP)**
• **Ohmori, Shiro, c/o Sony Corporation**
**Tokyo (JP)**

(74) Representative: **Nicholls, Michael John**
**J.A. KEMP & CO.**
**14, South Square**
**Gray's Inn**
**London WC1R 5LX (GB)**

(54) **Windband speech synthesis from a narrowband speech signal**

(57)    In a receiver, a band width expander produces, from a speech sound parameter code intended for production of a speech sound signal having a speech frequency included in a first band $B_1$ of 300 to 3,400 Hz, a speech sound parameter for a second band $B_2$ of 3,400 to 6,000 Hz to synthesize a wide-band LPC by an LPC synthesis circuit. Thereafter, a low-frequency band component (300 to 3,400 Hz) of an original speech sound is replaced with a signal resulted from up-sampling of the original speech sound. That is, the speech sound is supplied to a highpass filter to maintain only a high-frequency band component (3,400 to 6,000 Hz) of the speech sound. A high-frequency component of the high frequency band is suppressed, and the gain is adjusted, then the original speech sound (300 to 3,400 Hz) is added to the up-sampled one (of the second sampling rate $f_{s2}$) in an adder.

FIG.4

EP 1 008 984 A2

**Description**

The present invention relates to a receiving apparatus and method and also to a communicating apparatus and method, adapted to receive a speech sound parameter code obtained by coding a speech sound signal and transmitted via a communication network or broadcasting network and synthesize the speech sound signal from the speech sound parameter code.

In the conventional communicating apparatuses, both a speech sound input to, and speech sound output from, a receiver are identical in sampling rate to each other and also their frequencies are included in the same speech frequency band because the transmission frequency band of the telephone line is limited to a narrow range of 300 to 3,400 Hz, for example, and thus the speech frequency band of a speech sound signal transmitted via the telephone line is limited.

However, a speech sound output having a speech frequency included in a similar speech frequency band to that of an input speech sound transmitted with a speech frequency included within the limited speech frequency band cannot be said to have a high quality. Namely, the output speech sound is not acoustically good. Also, the sound quality of digital mobile telephones using the conventional communicating apparatus is not satisfactory.

It is therefore an object of the present invention to overcome the above-mentioned drawbacks of the prior art by providing a receiving and method and communicating apparatus and method, adapted to provide a speech sound output having an improved acoustic quality.

According to the present invention, there is provided a receiving apparatus including:

a sampling rate converting means for converting a sampling rate $f_{s1}$ of a speech sound signal whose speech frequency is included in a first band $B_1$, produced from a speech sound parameter code based on a signal transmitted from a transmitter to produce the speech sound signal of the first sampling rate $f_{s1}$, to a second sampling rate $f_{s2}$ ($f_{s2} > f_{s1}$); and

an out-of-band component predicting means for predicting, based on the speech sound parameter code, a speech sound signal of the second sampling rate $f_{s2}$, having a speech frequency included in a second band $B_2$ being a component outside the first band $B_1$.

The above receiving apparatus further includes an adding means for adding the speech sound signal of the speech frequency included in the first band $B_1$, made by the sampling rate converting means to be sampled at the second sampling rate $f_{s2}$, and the speech sound signal of the second sampling rate $f_{s2}$, predicted by the out-of-band component predicting means and having the speech frequency included in the second band $B_2$.

According to the present invention, there is provided a receiving method including the steps of:

converting means for converting a sampling rate $f_{s1}$ of a speech sound signal whose speech frequency is included in a first band $B_1$, produced from a speech sound parameter code based on a signal transmitted from a transmitter to produce the speech sound signal of the first sampling rate $f_{s1}$, to a second sampling rate $f_{s2}$ ($f_{s2} > f_{s1}$); and

predicting, based on the speech sound parameter code, a speech sound signal of the second sampling rate $f_{s2}$, having a speech frequency included in a second band $B_2$ being a component outside the first band $B_1$.

According to the present invention, there is provided a communicating apparatus including:

a transmitting means for encoding an input speech sound signal with a first sampling rate $f_{s1}$ to produce a signal for transmission; and

a receiving means for producing a speech sound signal of a second sampling rate $f_{s2}$ ($f_{s2} > f_{s1}$) from a speech sound parameter code based on the transmission signal produced by encoding with the first sampling rate $f_{s1}$.

The above receiving means further includes a sampling rate converting means for converting a sampling rate $f_{s1}$ of a speech sound signal having a speech frequency included in a first band $B_1$, produced from a speech sound parameter code based on a signal transmitted from a transmitter to produce the speech sound signal of the first sampling rate $f_{s1}$, to a second sampling rate $f_{s2}$ ($f_{s2} > f_{s1}$); and means for predicting, based on the speech sound parameter code, a speech sound signal of the second sampling rate $f_{s2}$, having a speech frequency included in a second band $B_2$ being a component out of the first band $B_1$.

The above receiving means also includes an adding means for adding the speech sound signal having a speech frequency included in the first band $B_1$, made by the sampling rate converting means to be sampled at the second sampling rate $f_{s2}$, and the speech sound signal of the second sampling rate $f_{s2}$, having a speech frequency included in the second band $B_2$ and predicted by the out-of-band component predicting means.

According to the present invention, there is provided a communication method including the steps of:

encoding an input speech sound signal with a first sampling rate $f_{s1}$ to produce a signal for transmission; and predicting, based on a speech sound parameter code based on the transmission signal produced by encoding with the first sampling rate $f_{s1}$, a speech sound signal of a second sampling rate $f_{s2}$, having a speech frequency included in the second band $B_2$ being a component outside the first band $B_1$.

According to the present invention, the first sampling rate $f_{s1}$ included in the first band $B_1$ produced using the speech sound parameter code based on the transmission signal transmitted to the receiving means is converted to the second sampling rate $f_{s2}$ ($f_{s2} > f_{s1}$) and the second sampling rate $f_{s2}$ is added to the speech sound signal included in the second band $B_2$ of the second sampling rate $f_{s2}$ predicted using the speech sound parameter code, thereby permitting to provide a wide-band speech sound having a high sampling rate.

The present invention will be further described by way of example with reference to the accompanying drawings, in which:-

FIG. 1 is a block diagram of an embodiment of the receiver according to the present invention;
FIG. 2 is a block diagram of a transmitter adapted to transmit audio parameter code to the receiver shown in FIG. 1 via a base station;
FIG. 3 shows a PSI-CELP decoder forming together with a signal selector a signal processor provided in the receiver shown in FIG. 1;
FIG. 4 is a block diagram of the signal selector forming together with the PSI-CELP decoder the signal processor provided in the receiver shown in FIG. 1;
FIG. 5 is a detailed block diagram of an excitation source band widening circuit included in the signal selector shown in FIG. 4;
FIG. 6 is a detailed block diagram of a noise reducer included in the signal selector shown in FIG. 4;
FIG. 7 is a detailed flow chart of the operations of the signal selector shown in FIG. 4;
FIG. 8 is a flow chart of a procedure of generating training data used in a code book used in the signal selector shown in FIG. 4;
FIG. 9 is a flow chart of a procedure of generating the code book;
FIG. 10 shows a VSELP decoder included in a variant of the signal selector provided in the receiver shown in FIG. 1;
FIG. 11 is a block diagram of a signal selector included in a variant of the signal processor provided in the receiver shown in FIG. 1;
FIG. 12 is a detailed flow chart of the operations of the signal selector shown in FIG. 1;
FIG. 13 is a block diagram of a signal selector included in another variant of the signal processor provided in the receiver shown in FIG. 1;
FIG. 14 is a block diagram of a decoder included in a still another variant of the signal processor provided in the receiver shown in FIG. 1;
FIG. 15 is a block diagram of a signal selector included in a yet another variant of the signal processor provided in the receiver shown in FIG. 1;
FIG. 16 is a block diagram of the noise reducer provided in the signal selector shown in FIG. 4, having a post-filter connected to the rear stage thereof;
FIG. 17 is a detailed block diagram of the post-filter included in the signal selector shown in FIG. 16;
FIG. 18 explains the filter factor updating period and gain updating period of the post-filter; and
FIG. 19 is a block diagram of a mobile telephone in which a receiver including the signal processor using each of the signal selectors is provided integrally with the transmitter.

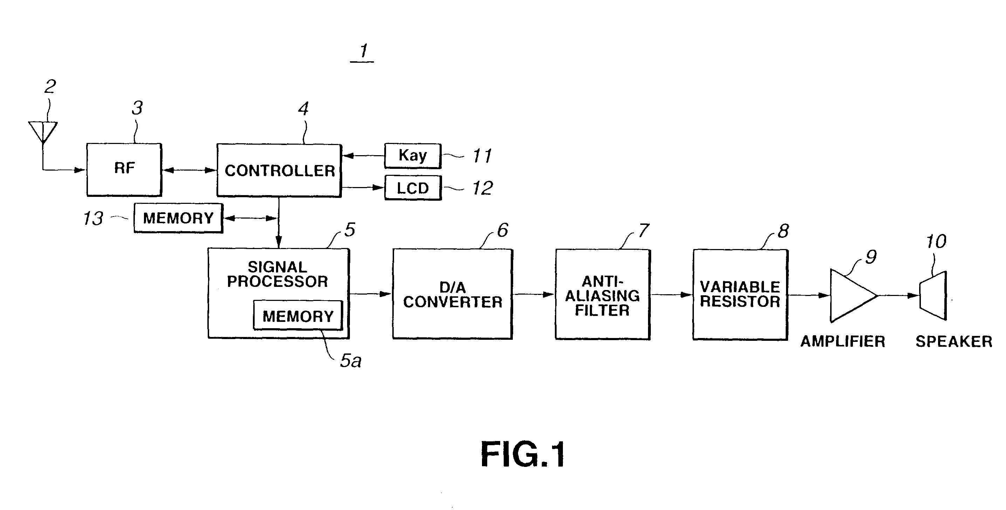

Referring now to FIG. 1, there is illustrated an embodiment of the receiver according to the present invention. The receiver is generally indicated with a reference 1. The receiver 1 may be used in the currently prevailing digital mobile telephones designed in conformity with the personal digital cellular (PDC) standard (RCR STD-27).

For producing a speech sound signal of a first sampling rate $f_{s1}$, the receiver 1 is adapted to produce, from a speech sound parameter code transmitted via a base station from a transmitter which will be described later, a speech sound signal having a speech frequency included in a first band $B_1$ and whose sampling rate is the first sampling rate $f_{s1}$, a speech sound signal having a speech frequency included in a second band $B_2$ and whose sampling rate is a second sampling rate $f_{s2}$ ($f_{s2} > f_{s1}$), and a speech sound signal having a speech frequency included in a wide band $B_W$ (first band $B_1$ + second band $B_2$) and whose sampling rate is the second sampling rate $f_{s2}$, and provide a selected one of these three speech sound signals. The first sampling rate $f_{s1}$ is 8 kHz, and the second sampling rate $f_{s2}$ is 16 kHz. The first speech frequency band $B_1$ ranges from 300 to 3,400 Hz, and second speech frequency band $B_2$ ranges 3,400 to 6,000 Hz. Thus, the wide speech frequency band $B_W$ ranges from 300 to 6,000 Hz.

As shown in FIG. 1, the speech sound parameter code the receiver 1 receives from the base station via an antenna 2 is stored into a memory 5a of a signal processor 5 through an RF receiver 3 and controller 4.

The signal processor 5 will decode the speech sound parameter code stored in the memory 5a of the signal processor 5 by a decoder provided therein, process it in a predetermined manner, and then provide the processed signal as an output. This operation of the receiver 1 will be referred to as "real-time communication mode" hereinafter. Also, when the user uses a telephone answering function also provided in the receiver 1 to reproduce a received message speech sound signal automatically recorded by the telephone answering function, the signal processor 5 will decode, by the decoder, a speech sound parameter code of the speech sound signal stored in a memory 13 also provided in the receiver 1, process it in a predetermined manner, and provide the processed signal as an output. This operation will be referred to as "message reproduction mode" hereinafter.

During a real-time communication and message reproduction, the output signal from the signal processor 5 is converted by a D/A converter 6 to an analog signal. The analog signal is passed through an anti-aliasing filter 7, variable resistor 8 and amplifier 9, and then provided as an output from a speaker 10. In addition, a key board 11 and LCD display 12, for example, are connected to the controller 4.

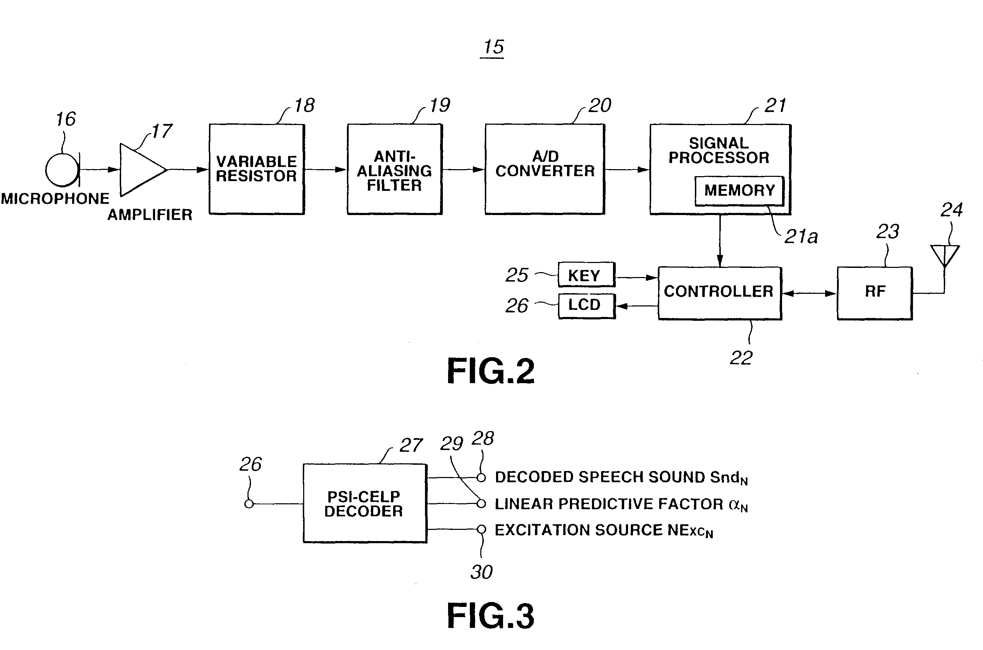

Referring now to FIG. 2, there is illustrated a transmitter adapted to transmit the speech sound parameter code through a radio transmission line and base station, for example. The transmitter is generally indicated with a reference 15. This transmitter 15 may be used in the currently prevailing digital mobile telephones designed in confonnity with the PDC standard (RCR STD-27).

As shown in FIG. 2, a speech sound signal supplied to a microphone 16 is stored into a memory 21a of a signal processor 21 via an amplifier 17, variable resistor 18, anti-aliasing filter 19 and an A/D converter 20.

The transmitter 15 will code the speech sound signal stored in the memory 21a by a speech sound encoder provided in the signal processor 21 to a speech sound parameter code, and provide it as an output. The speech sound parameter code is transmitted to the base station via a controller 22, RF transmitter 23 and an antenna 24. A key board 25 and LCD display 26 are connected to the controller 22.

The speech sound encoder in the signal processor 21 produces a speech sound parameter code whose speech frequency is included in a narrow band limited by the radio transmission line. Generally, the transmission band ranges from 300 to 3,400 Hz. The speech sound parameter code based on the transmitted signal is supplied to the RF transmitter 23 through the controller 22. As such a speech sound parameter, there are available an excitation source-related linear predictive coding (LPC) residual or linear predictive filter factor $\alpha$, pitch frequency-related lag, frame power R0 in a frame of 20 msec, for example, etc.

A speech sound parameter code is transmitted from the transmitter 15 through the base station. If the telephone answering function of the receiver 1 is set, the speech sound parameter code is recorded into the memory 13 in the receiver 1 as having previously been described.

Table 1 lists speech sound parameter codes in a full-rate speech sound data format of one frame according to the digital telephone standard, and Table 2 lists speech sound parameter codes in a half-rate speech sound data format.

Table 1

| | Bit 0 | Bit 1 | Bit 2 | Bit 3 | Bit 4 | Bit 5 | Bit 6 | Bit 7 | Bit 8 | Bit 9 | Bit 10 | Bit 11 | Bit 12 | Bit 13 | Bit 14 | Bit 15 |
|---|---|---|---|---|---|---|---|---|---|---|---|---|---|---|---|---|
| Word 0 | LAG 4.4 | LAG 2.4 | LAG 4.5 | LAG 2.5 | LAG 4.6 | LAG 2.6 | LPC 5.3 | LPC 1.2 | LPC 4.3 | LPC 3.3 | RO 2 | RO 3 | CRC 0 | CRC 2 | CRC 4 | CRC 6 |
| Word 1 | LPC 1.1 | GSPO 3.4 | GSPO 1.4 | SOFI 0 | GSPO 4.5 | GSPO 2.5 | LAG 4.0 | LAG 2.0 | LAG 4.1 | LAG 2.1 | LAG 4.2 | LAG 2.2 | GSPO 4.6 | GSPO 2.6 | LAG 4.3 | LAG 2.3 |
| Word 2 | GSPO 1.2 | GSPO 3.2 | GSPO 1.1 | GSPO 3.1 | GSPO 1.0 | GSPO 3.0 | LPC 6.2 | GSPO 4.0 | GSPO 2.0 | GSPO 4.1 | GSPO 2.1 | GSPO 4.2 | GSPO 2.2 | GSPO 4.3 | GSPO 2.3 | LPC 3.1 |
| Word 3 | GSPO 3.6 | LAG 1.2 | LAG 3.2 | LAG 1.1 | LAG 3.1 | LAG 1.0 | LAG 3.0 | GSPO 1.5 | GSPO 3.5 | RO 1 | LPC 4.2 | GSPO 2.4 | GSPO 4.4 | LPC 2.2 | GSPO 1.3 | GSPO 3.3 |
| Word 4 | CRC 1 | RO 4 | LPC 1.4 | LPC 2.4 | LPC 1.3 | LPC 2.3 | LPC 3.2 | LAG 1.6 | LAG 3.6 | LAG 1.5 | LAG 3.5 | LAG 1.4 | LAG 3.4 | LAG 1.3 | LAG 3.3 | GSPO 1.6 |
| Word 5 | LPC 2.1 | LPC 6.0 | CODE 4.4 | CODE 3.7 | LPC 9.2 | CODE 4.2 | CODE 2.0 | CODE 4.1 | LPC 7.1 | TAIL 4 | TAIL 3 | TAIL 2 | TAIL 1 | TAIL 0 | CRC 5 | CRC 3 |
| Word 6 | LPC 10.0 | CODE 1.2 | CODE 2.7 | CODE 4.7 | CODE 4.3 | RO 0 | LPC 7.2 | CODE 3.0 | CODE 1.5 | CODE 1.4 | LPC 1.0 | CODE 1.1 | LPC 6.1 | CODE 1.6 | LPC 5.0 | CODE 2.4 |
| Word 7 | CODE 1.7 | LPC 4.1 | CODE 3.4 | LPC 5.1 | LPC 4.0 | CODE 1.8 | CODE 3.1 | LPC 10.1 | CODE 2.6 | LPC 8.1 | CODE 3.6 | LPC 3.0 | LPC 8.2 | CODE 1.3 | CODE 4.5 | CODE 4.0 |
| Word 8 | CODE 2.2 | CODE 4.6 | LPC 8.0 | LPC 9.0 | CODE 2.8 | CODE 2.3 | CODE 3.8 | CODE 2.1 | CODE 3.3 | CODE 2.5 | CODE 3.2 | CODE 4.8 | LPC 9.1 | CODE 1.0 | CODE 3.5 | LPC 7.0 |
| Word 9 | X | X | X | X | X | X | X | X | X | X | X | X | X | X | LPC 5.3 | LPC 2.0 |

Table 2

| | Bit 15 | Bit 14 | Bit 13 | Bit 12 | Bit 11 | Bit 10 | Bit 9 | Bit 8 | Bit 7 | Bit 6 | Bit 5 | Bit 4 | Bit 3 | Bit 2 | Bit 1 | Bit 0 |
|---|---|---|---|---|---|---|---|---|---|---|---|---|---|---|---|---|
| Word 0 | CRC 0 | CRC 2 | CRC 4 | CRC 6 | CRC 8 | LSP 0.1 | LSP 0.3 | LSP 0.5 | LSP 1.0 | LSP 1.2 | LSP 1.4 | LSP 1.6 | POW 0 | POW 2 | POW 4 | POW 6 |
| Word 1 | LAG 0.1 | LAG 0.3 | LAG 0.5 | LAG 0.7 | LAG 1.1 | LAG 1.3 | LAG 1.5 | LAG 1.7 | LAG 2.1 | LAG 2.3 | LAG 2.5 | LAG 2.7 | LAG 3.1 | LAG 3.3 | LAG 3.5 | LAG 3.7 |
| Word 2 | GAIN 0.5 | GAIN 1.4 | GAIN 1.6 | GAIN 2.5 | GAIN 3.4 | GAIN 3.6 | GAIN 3.5 | GAIN 2.6 | GAIN 2.4 | GAIN 1.5 | GAIN 0.6 | GAIN 0.4 | LAG 3.6 | LAG 3.4 | LAG 3.2 | LAG 3.0 |
| Word 3 | LAG 2.6 | LAG 2.4 | LAG 2.2 | LAG 2.0 | LAG 1.6 | LAG 1.4 | LAG 1.2 | LAG 1.0 | LAG 0.6 | LAG 0.4 | LAG 0.2 | LAG 0.0 | POW 5 | POW 3 | POW 1 | LSP 1.7 |
| Word 4 | LSP 1.5 | LSP 1.3 | LSP 1.1 | LSP 0.6 | LSP 0.4 | LSP 0.2 | LSP 0.0 | CRC 7 | CRC 5 | CRC 3 | CRC 1 | TAIL 0 | TAIL 1 | TAIL 2 | TAIL 3 | TAIL 4 |
| Word 5 | TAIL 5 | TAIL 6 | LSP 2.0 | LSP 2.1 | LSP 2.2 | LSP 2.3 | LSP 2.4 | LSP 2.5 | LSP 2.6 | LSP 2.7 | LSP 3.0 | LSP 3.1 | LSP 3.2 | LSP 3.3 | LSP 3.4 | LSP 3.5 |
| Word 6 | LSP 3.6 | LSP 3.7 | GAIN 0.0 | GAIN 0.1 | GAIN 0.2 | GAIN 0.3 | CODE 0.0 | CODE 0.1 | CODE 0.2 | CODE 0.3 | CODE 0.4 | CODE 0.5 | CODE 0.6 | CODE 0.7 | CODE 0.8 | CODE 0.9 |
| Word 7 | GAIN 1.0 | GAIN 1.1 | GAIN 1.2 | GAIN 1.3 | CODE 1.0 | CODE 1.1 | CODE 1.2 | CODE 1.3 | CODE 1.4 | CODE 1.5 | CODE 1.6 | CODE 1.7 | CODE 1.8 | CODE 1.9 | GAIN 2.0 | GAIN 2.1 |
| Word 8 | GAIN 2.2 | GAIN 2.3 | CODE 2.0 | CODE 2.1 | CODE 2.2 | CODE 2.3 | CODE 2.4 | CODE 2.5 | CODE 2.6 | CODE 2.7 | CODE 2.8 | CODE 2.9 | GAIN 3.0 | GAIN 3.1 | GAIN 3.2 | GAIN 3.3 |
| Word 9 | CODE 3.0 | CODE 3.1 | CODE 3.2 | CODE 3.3 | CODE 3.4 | CODE 3.5 | CODE 3.6 | CODE 3.7 | CODE 3.8 | CODE 3.9 | X | X | X | X | X | X |

EP 1 008 984 A2

As aforementioned, the speech sound parameter codes used in the present invention include, in addition to the excitation source-related linear predictive coding (LPC) residual or linear predictive filter factor $\alpha$, a pitch frequency-related lag, frame power R0 in a frame of 20 msec, for example, CRC. These speech sound parameter codes are transmitted in units of 10 words per frame in which one word includes 16 bits.

When in the message reproduction mode, the speech sound parameter code is read from the memory 13 and sent to the signal processor 5 in the receiver 1.

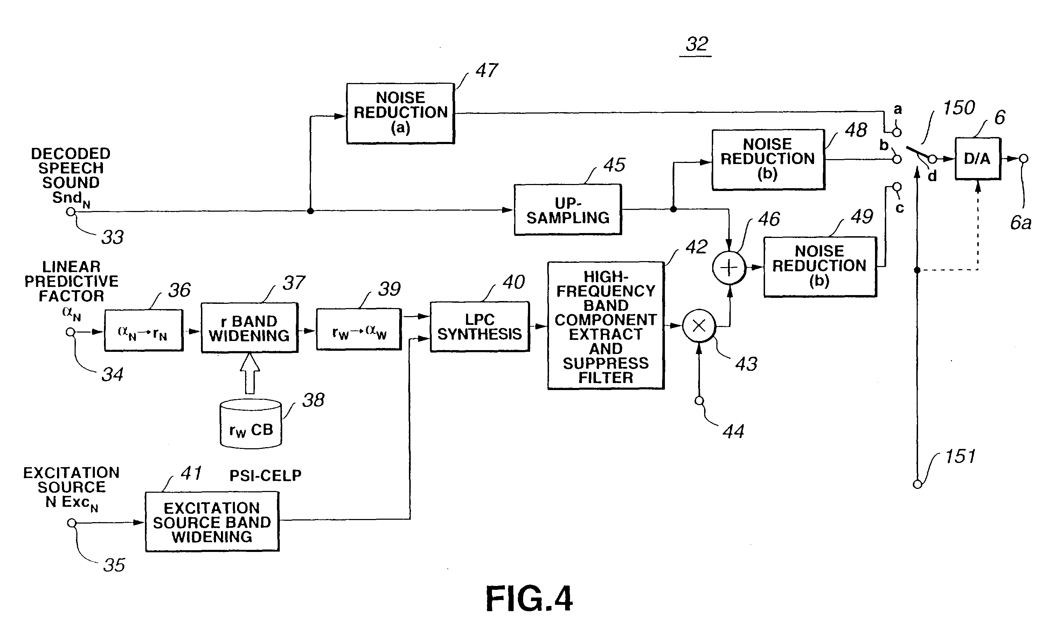

The signal processor 5 in the receiver 1 shown in FIG. 1 is further provided with a PSI-CELP decoder 27 shown in FIG. 3 and a signal selector 32 shown in FIG. 4.

If the speech sound encoder in the signal processor 21 provided in the receiver 15 shown in FIG. 2 adopts the PSI-CELP (pitch synchronous innovation - CELP) coding method, the PSI-CELP decoder 27 decodes the speech sound based on the signal coded, for transmission, by the PSI-CELP method, and delivers the decoded speech sound $Snd_N$ at an output terminal 28, a linear predictive filter factor $\alpha_N$ at an output terminal 29, and an excitation source N $Exc_N$ at an output terminal 30. The signal coded by the PSI-CELP method is transmitted to produce a speech sound signal having a speech frequency included in the first band $B_1$ of 300 to 3,400 Hz and whose sampling rate is the first sampling rate $f_{s1}$ of 8 kHz.

The signal selector 32 includes a sampling rate converting means for converting, to the second sampling rate $f_{s2}$ of 16 kHz, the sampling rate of a decoded speech sound $Snd_N$ having a speech frequency included in the first band $B_1$ (of 300 to 3,400 Hz), having been decoded by the PSI-CELP decoder 27 based on the PSI-CELP-coded signal transmitted from the transmitter to produce the speech sound signal of which the sampling rate is the first sampling rate $f_{s1}$ of 8 kHz, and a noise reducer for subjecting to a first process of noise reduction the speech sound signal having the speech frequency included in the first band $B_1$ and whose sampling rate is the first sampling rate $f_{s1}$, produced from the speech sound parameter code, and to a second process of noise reduction the speech sound signal having a speech frequency include in the first band $B_1$ whose sampling rate is the second sampling rate $f_{s2}$, supplied from the sampling rate converting means, and means for selecting a first noise reduction output or second noise reduction output from the noise reducer, as necessary.

In addition, the receiver 1 includes an out-of-band component predicting means for predicting a signal having a speech frequency included in the second band $B_2$ of 3,400 to 6,000 Hz and whose sampling rate is the second sampling rate $f_{s2}$ of 16 kHz, supplied from the linear predictive filter factor $\alpha_N$ and excitation source N $Exc_N$ provided through the decoding of the PSI-CELP-coded signal by the PSI-CELP decoder 27, and means for adding the speech sound signal of the second sampling rate $f_{s2}$, having a speech frequency included in the first band $B_1$, supplied from the sampling rate converting means, to the speech sound signal having a speech frequency included in the second band $B_2$ and whose sampling rate is the second sampling rate $f_{s2}$, predicted by the out-of-band component predicting means. The noise reducer subjects the addition output from the adding means to a third process of noise reduction, and the selecting means selects any one of the first, second and third noise reduction outputs, as necessary.

The noise reducer includes first to third circuits 47 to 49 shown in FIG. 4. These circuits 47 to 49 for noise reduction are provided for the first process of noise reduction (a), second process of noise reduction (b), and third process of noise reduction (b), respectively. The circuit 48 or 49 for the second process of noise reduction (b) or third process of noise reduction (b), respectively, is provided to apply the first process of noise reduction (a) (in the circuit 47) to a sample having a speech frequency which is $f_{s2}/f_{s1}$ of that of the speech sound signal having a speech frequency included in the first band $B_1$ or wide band $B_W$ and whose sampling rate is the second sampling rate $f_{s2}$. Note that the signs (a) and (b) added to the circuits for noise reduction are intended to discriminate a process of noise reduction for the sampling rate $f_{s1}$ and a one for the sampling rate $f_{s2}$ from each other.

In FIG. 4, the aforementioned sampling rate converting means is shown as an up-sampling circuit 45, the selecting means is a selection switch 150, and the adding means is an adder 46. The out-of-band component predicting means is the remainder of the signal selector 32 in FIG. 4 except for these up-sampling circuit 45, circuits 47, 48 and 49 for the processes of noise reduction (a), (b) and (b), respectively, selection switch 150, and the adder 46.

Next, the signal selector 32 will further be described hereunder:

First, the out-of-band component predicting means consists of a circuit 36 to convert a linear predictive filter factor to an autocorrelation ($\alpha_N \rightarrow r_N$), a circuit 37 to widen the speech frequency band of autocorrelation (r), a wide-band code book ($r_W$CB) 38, a circuit 39 to convert an autocorrelation to a linear predictive filter factor ($r_w \rightarrow \alpha_W$), an LPC synthesis circuit 40, an excitation source band widening circuit 41, a high-frequency band extraction/suppression filter 42, and a multiplier 43.

A linear predictive filter factor $\alpha_N$ supplied at an input terminal 34 is supplied to the $\alpha_N/r_N$ conversion circuit 36 where the linear predictive filter factor $\alpha_N$ is converted to an autocorrelation $r_N$ which will be supplied to the autocorrelation (r) frequency band widening circuit 37. This the autocorrelation (r) frequency band widening circuit 37 uses the wide band code book ($r_W$CB) 38 to widen the band of the autocorrelation (r). The wide-band code book ($r_W$CB) 38 has previously been prepared based on an autocorrelation parameter $r_W$ extracted from a wide-band speech sound.

The autocorrelation $r_W$ whose frequency band has been widened by the autocorrelation (r) band widening circuit 37 based on the wide band code book ($r_W$CB) 38 is supplied to the $r_W/\alpha_W$ conversion circuit 39. The $r_W/\alpha_W$ conversion circuit 39 converts the band-widened autocorrelation parameter $r_W$ to a band-widened linear predictive filter factor $\alpha_W$ again and supplies it to the LPC synthesis circuit 40.

The LPC synthesis circuit 40 synthesizes a wide-band speech sound based on the band-widened or wide-band linear predictive filter factor $\alpha_W$ from the $r_W/\alpha_W$ conversion circuit 39 and the band-widened excitation source from the excitation source band widening circuit 41.

The synthesis output from the LPC synthesis circuit 40 is supplied to the high-frequency band extraction/suppression filter 42. This high-frequency band extraction/suppression filter 42 removes a signal component having a speech frequency included in the band of 300 to 3,400 Hz and suppresses a high frequency component to extract a signal component having a speech frequency included in the second band $B_2$ of 3,400 to 6,000 Hz. An output from this filter 42 is supplied to the multiplier 43 in which it will be multiplied by a gain supplied from a terminal 44. An output (= a product of the filter output and gain, in the second band $B_2$ ranging 3,400 to 6,000 Hz) from the multiplier 43 is supplied to the adder 46.

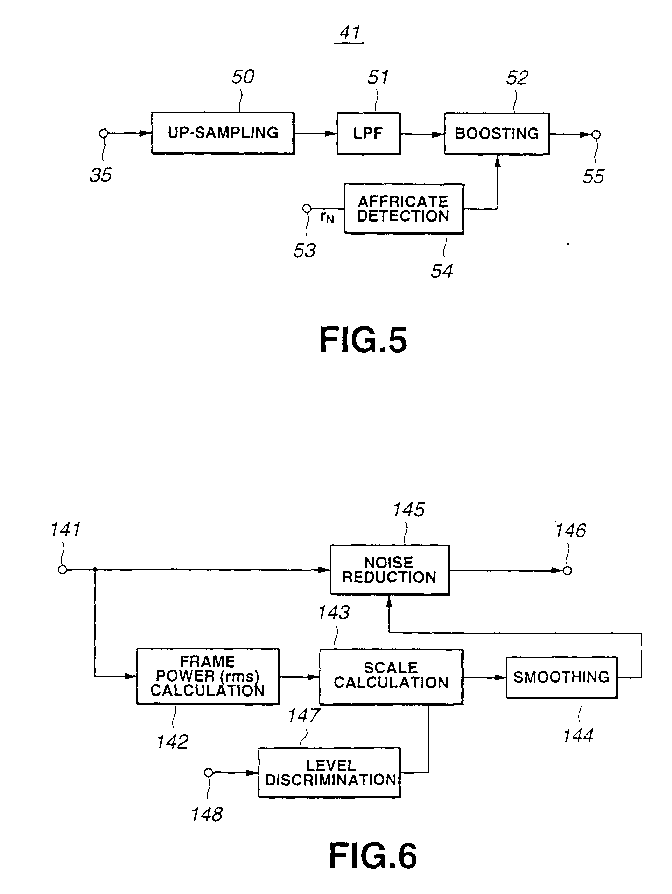

The LPC synthesis circuit 40 is also supplied with a band-widened excitation source from the excitation source band widening circuit 41. The excitation source band widening circuit 41 widens the band an LPC residual (will be given as the excitation source N $Exc_N$) as a parameter concerning an excitation source supplied from an input terminal 35. The excitation source band widening circuit 41 is shown in detail in FIG. 5.

First, the excitation source N $Exc_N$ supplied via the input terminal 35 is up-sampled by an up-sampling circuit 50. An output from the up-sampling circuit 50 is sent from an output terminal 55 to the LPC synthesis circuit 40 through an LPF (low-pass filter) 51 and a booster 52. That is, a signal produced by up-sampling the excitation source N $Exc_N$ is used as the band-widened excitation source for synthesis of a speech sound signal. The booster 52 is provided to boost the band-widened excitation source when an affricate or fricative has been detected, and its boosting extent is controlled depending upon on an output from an affricate detector 54. The affricate detector 54 receives an autocorrelation $r_N$ from the $\alpha_N/r_N$ converter 36 through an input terminal 53 to detect an affricate or fricative.

An excitation source from the excitation source band widening circuit 41 constructed as in the above is supplied to the LPC synthesis circuit 40 which will synthesize a wide-band speech sound based on the wide-band linear predictive filter factor $\alpha_W$ from the $r_W/\alpha_W$ converter 39 and the band-widened excitation source. The circuitry having been described in the above is the out-of-band component prediction means.

Next, there will be described below the noise reducer for effecting the first process of noise reduction with respect to a decoded speech sound $Snd_N$ supplied from the decoder 27 shown in FIG. 3 through an input terminal 33:

Using the method of noise reduction disclosed in the Japanese Unexamined Patent Publication No. 7-193548 the Application of the present invention had already filed, the noise reducer detects a background noise and suppresses it. This noise reducing method is such that a control signal is produced according to a noise level in a background noise area detected from a speech sound parameter code based on a transmitted signal from the transmitter to produce a speech sound signal of the first sampling rate $f_{s1}$ and the manner of noise reduction is changed based on the control signal.

Referring now to FIG. 6, there is illustrated in detail the construction of the noise reducer adopting the above noise reducing method. The decoded speech sound $Snd_N$ having a speech frequency included in the band of 300 to 3,400 Hz and whose sampling rate is 8 kHz is supplied to a frame power calculation circuit 142 via an input terminal 141. The frame power calculation circuit 142 calculates a square root, a so-called nns, as a power of each frame having a period of 20 msec, for example, from the decoded speech sound $Snd_N$. The frame mean power calculated by the frame power calculation circuit 142 is supplied to a scale calculation circuit 143 which will calculate a scale as a factor for suppression of a noise from the frame mean power calculated by the frame power calculation circuit 142. The scale calculated by the scale calculation circuit 143 is passed to a smoothing circuit 144 where the scale is smoothed. The smoothing process is effected to avoid a discontinuity between input speech sound signal divisions made in frames each of 160 samples per 20 msec, for example. The scale having been subjected to this smoothing process is sent to a noise reduction circuit 145 where it is used to remove a noise from the band-widened speech sound signal $Snd_W$.

The scale calculation circuit 143 is supplied with a control signal produced through discrimination by a level discrimination circuit 147 of a noise level detection signal supplied via a terminal 148. Based on the control signal, a threshold is selected for the above-mentioned calculation of a scale. The operations of the noise reducer constructed as in the above will further be described later.

As shown in FIG. 4, the up-sampling circuit 45 is provided as the sampling rate converting means to convert the sampling rate $f_{s1}$ (8 kHz)of a speech sound signal having a speech frequency included in the first band $B_1$ of 300 to 3,400 Hz, to the second sampling rate $f_{s2}$ of 16 kHz. The speech sound signal component whose speech frequency is included in the first band $B_1$ of 300 to 3,400 Hz and of which the sampling rate (8 kHz) having been converted to the second sampling rate of 16 kHz, is supplied to the adder 46 and the circuit 48 for the noise reduction (b).

In the adder 46, the speech sound signal component from the up-sampling circuit 45 is added to the speech sound signal component from the multiplier 43, having a speech sound included in the second band $B_2$ of 3,400 to 6,000 Hz and whose sampling rate is the second sampling rate $f_{s2}$ is 16 kHz, and the addition output from the address is supplied to the noise reduction circuit 49 for the process of noise reduction (b).

The signal selector 32 has the selection switch 150 as the selecting means to select any one of the speech sound signal having a speech frequency included in the first band $B_1$ of 300 to 3,400 Hz and whose sampling rate is the first sampling rate $f_{s1}$ of 8 kHz, from which the noise has been reduced by the circuit 47 for the noise reduction (a), speech sound signal having a speech frequency included in the first band $B_1$ of 300 to 3,400 Hz and whose sampling rate is the second sampling rate $f_{s2}$ of 16 kHz, from which the noise has been reduced by the circuit 48 for the noise reduction (b), and the speech sound signal having a speech frequency included in the wide band $B_W$ of 300 to 6,000 Hz and whose sampling rate is the second sampling rate $f_{s2}$ of 16 kHz, from which the noise has been reduced by the circuit 49 for the noise reduction (b).

The selection switch 150 has three selectable terminals a, b and c and a selecting piece d. It receives at the selectable terminal a thereof the speech sound signal having a speech frequency included in the first band $B_1$ of 300 to 3,400 Hz and whose sampling rate is the first sampling rate $f_{s1}$ of 8 kHz, at the selectable terminal b the speech sound signal included in the first band $B_1$ of 300 to 3,400 Hz of the second sampling rate $f_{s2}$ of 16 kHz, and at the selectable terminal c the speech sound signal having a speech frequency included in the wide band $B_W$ of 300 to 6,000 Hz and whose sampling rate is the second sampling rate $f_{s2}$ of 16 kHz. A desired one of the speech sound signals is supplied to the D/A converter 6 by shifting a selecting piece d of the selection switch 150 to a corresponding one of the selectable terminals a, b and c s based on a selection control signal from a selection control signal terminal 151.

The main operations of the aforementioned signal selector 32 will be described below:

The signal selector 32 produces a parameter for coding of a speech sound having a speech frequency included in the second band $B_2$ of 3,400 to 6,000 Hz, from a speech sound parameter code intended for production of a speech sound signal of a speech frequency included in the first band $B_1$ of 300 to 3,400 Hz, and synthesizes a wide-band LPC. Then, the signal selector 32 replaces a low-frequency band (300 to 3,400 Hz) being the speech frequency band of the original speech sound with the original speech sound whose sampling rate has been up-sampled to 16 kHz. Namely, the signal selector 32 subjects the speech sound signal to a high-pass filtering to maintain only a high-frequency band (3,400 to 6,000 Hz) component, suppresses a highest frequency component of the high-frequency band, adjusts the gain, and then adds the original speech sound of a speech frequency ranging from 300 to 3,400 MHz to the up-sampled original speech sound (of the second sampling rate $f_{s2}$) to provide a speech sound signal having a speech frequency included in the wide band $B_W$ (300 to 6,000 Hz) and whose sampling rate is the second sampling rate $f_{s2}$ of 16 kHz.

For widening the frequency band of the speech sound parameter code, both the linear predictive filter factor $\alpha$ and excitation source N $Exc_N$ have to be widened in speech frequency band. Also, for widening the frequency band of the linear predictive filter factor $\alpha$, it is necessary to prepare a code book of the autocorrelation r being a parameter which can be converted to the linear predictive filter factor $\alpha$ which can also be converted back to the autocorrelation r. The autocorrelation r is widened in speech frequency band by quantization and dequantization based on the code book.

First, the band widening of the linear predictive filter factor $\alpha$ will be described herebelow:

Taking in consideration that the linear predictive filter factor $\alpha$ is a filter factor representing a spectrum envelope, the linear predictive filter factor $\alpha$ is converted once to the autocorrelation r being a parameter representing another spectrum envelope from which a high-frequency band can easily be predicted, it is widened in frequency band, and then the wide-band or extended autocorrelation $r_W$ is inversely converted to the band-widened or wide-band linear predictive filter factor $\alpha$. For the extension, a vector quantization is used. A narrow-band autocorrelation $r_N$ should be subjected to vector quantization and a corresponding wide-band autocorrelation $r_W$ should be determined from the index of the vector-quantized autocorrelation.

Since there exists a constant relation between the narrow-band autocorrelation and wide-band autocorrelation as will further be described later, it suffices to prepare a code book of the wide-band autocorrelations. A narrow-band autocorrelation can be provided by vector-quantization of the code book and a wide-band autocorrelation can be determined by dequantization of the narrow-band autocorrelation.

On the assumption that a narrow-band signal is produced by limiting the speech frequency band of a wide-band signal, there exists a following relation (1) between the wide-band autocorrelation and narrow-band autocorrelation:

$$\phi(x_n) = \phi(x_w \otimes h) = \phi(x_w) \otimes \phi(h) \tag{1}$$

where $\phi$ is an autocorrelation, $x_n$ is a narrow-band signal, $x_w$ is a wide-band signal and h is an impulse response of a band limiting filter.

Further, a following expression (2) can be given based on the relation between the autocorrelation and power

spectrum:

$$\phi(h) = F^{-1}(|H|^2) \tag{2}$$

Assume that there is provided another band limiting filter having a frequency characteristic equal to the power characteristic of the aforementioned band limiting filter and it is H'. Then, the expression (2) can be given by a following expression (3):

$$\phi(h) = F^{-1}(|H|^2) = F^{-1}(H') = h' \tag{3}$$

The new filter has pass and inhibition bands equal to those of the existing band limiting filter, and an attenuation characteristic being a square of that of the latter filter. Therefore, the new filter can be said to be a band limiting filter. Taking this in consideration, the narrow-band autocorrelation can be simplified by convolution of the wide-band autocorrelation and impulse response of the band limiting filter, namely, by limiting the band of the wide-band autocorrelation. That is, this can be given by a following expression (4):

$$\phi(x_n) = \phi(x_w) \otimes h' \tag{4}$$

As seen from the foregoing, if only a wide-band code book is prepared, a narrow-band vector necessary for vector quantization of a narrow-band autocorrelation can be generated by calculation using the code book, and no code book has not to be prepared from a narrow-band autocorrelation.

Since the code vector of each wide-band autocorrelation $r_W$ varies along a curve which monotonously falls or gradually rises and falls, it will not vary greatly even if its low-frequency band is passed through the band limiting filter H'. Therefore, the narrow-band autocorrelation $r_n$ can be obtained by direct quantization of the code book of the wide-band autocorrelation $r_W$. However, since the sampling rate is a half of that for the wide band, comparison between the narrow- and wide-band autocorrelations should be done at every other orders.

The linear predictive filter factor $\alpha$ can be widened in band with a higher accuracy separately for the voiced sounds and unvoiced sounds. Thus, two code books are prepared for voiced sounds and unvoiced sounds, respectively.

Next, the band widening of excitation source will further be described below:

In the PSI-CELP method, an excitation source included in the narrow band is up-sampled by filling zeros by the up-sampling circuit 50 in FIG. 5, and a one distorted by aliasing is used. This method is very simple, but since a power of original speech sound power and differences in harmonic structure are preserved, the excitation source thus prepared by this method can be said to have a sufficient quality.

The wide band linear predictive filter factor $\alpha$ and wide-band excitation source are used in the LPC synthesis circuit 40 to synthesize a linear predictive code.

A speech sound synthesized by the wide-band LPC is low in quality if it is not further processed. For a higher quality, the speech sound has a low frequency band thereof replaced with an original speech sound $Snd_N$ provided as an output from a codec. For this purpose, of the synthesized speech sound, a speech frequency band beyond 3,400 Hz is extracted while the codec output is up-sampled to a sampling rate fs of 16 kHz, and the extracted result and up-sampled frequency are added together.

The gain by which the high-frequency band is multiplied in the multiplier 43 is adjustable by the gain controller according to the user's taste which would vary much from one user to another. To this end, a value is preset for a high-frequency band gain based on an input made by the user, and multiplication by the gain is done referring to the value.

Also, before the above-mentioned addition, the high-frequency band is filtered by the high-frequency band extraction and suppression filter 42 to somewhat suppress a component of higher than about 6 kHz, to provide a speech sound easy to listen to. Since a filter factor is selectable and a filtering is done by a pre-selected filter, a high-frequency band is selectable according to a user's taste. The filter selection can be done by designating it by the user.

Note that since the filtering by the filter 42 will not influence the low-frequency band power characteristic, it may be done after completion of the above-mentioned addition. Otherwise, a filter which will influence the low-frequency band power characteristic may be done after the addition. This operation will provide a wide-band speech sound.

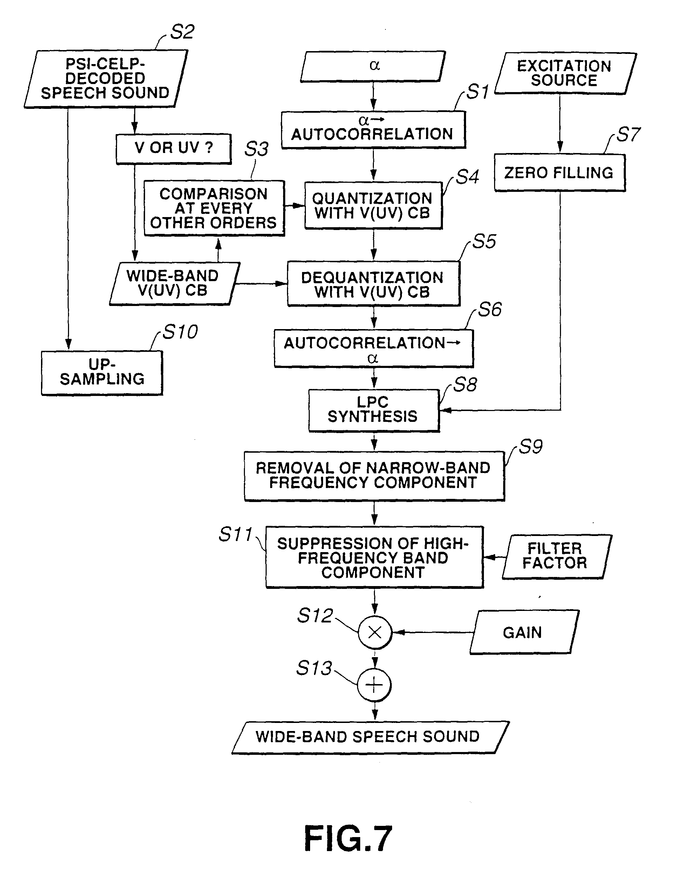

Next, based on the aforementioned theory of operation, the signal selector 32 produces a wide-band speech sound signal as will be described below with reference to the flow chart shown in FIG. 7.

At step S1, the $\alpha_N/r_N$ converter 36 shown in FIG. 4 converts a linear predictive filter factor $\alpha_N$ decoded by the decoder 27 shown in FIG. 3 to an autocorrelation $r_N$. At S2, the speech sound $Snd_N$ decoded by the decoder 27 is judged to be either a voiced sound (V) or an unvoiced sound (UV).

If the result of the judgment at step S2 is that the speech sound $Snd_N$ is a voiced sound (V), the voiced-sound autocorrelation $r_N$ is quantized at step S4 using a narrow-band voiced sound parameter determined at step S3 where the narrow-band voiced sound parameter is determined from the wide-band voiced sound (V) code book 38 by comparison at every other orders.

On the other hand, if the judgment result at step S2 is that the speech sound $Snd_N$ is an unvoiced sound (UV), a narrow-band unvoiced sound parameter $\underline{r}$ determined at step S3 is used at step S4 to quantize the unvoiced-sound autocorrelation $\underline{r}$.

At step S5, the voiced or unvoiced sound autocorrelation is dequantized using the wide-band voiced or unvoiced sound code book, respectively, to provide a wide-band autocorrelation $r_W$. This wide-band autocorrelation $r_W$ is converted to $\alpha_W$ by the $r_W/\alpha_W$ converter 39 at step S6.

On the other hand, the excitation source from the decoder 27 is up-sampled at step S7 by the up-sampling circuit 50 shown in FIG. 5 by filling zeros between samples, and widened in speech frequency band by anti-aliasing. The excitation source is supplied as a wide-band excitation source to the LPC synthesis circuit 40.

At step S8, the wide-band linear predictive filter factor $\alpha_W$ and wide-band excitation source are subjected to LPC synthesis in the LPC synthesis circuit 40 to provide a wide-band speech sound.

However, the wide-band speech sound is only a wide-band signal obtained by the prediction and includes an error caused by the prediction. Namely, it is poor in quality. Especially in a speech frequency range (300 to 3,400 Hz) of the input narrow-band speech sound, the original speech sound $Snd_N$ (input speech sound) of a codec output should be utilized as it is.

Therefore, from the speech sound synthesized by the LPC synthesis circuit 40, the speech frequency band of 300 to 3,400 Hz of the input narrow-band speech sound is removed at step S9 by filtering with the aid of a band stop filter (BSP).

At step S13, the synthesized speech sound from the LPC synthesis circuit 40 is added by the adder 46 to the original speech sound $Snd_N$ having been up-sampled by the up-sampling circuit 45 at step S10. At step S11, the high frequency band of the speech sound produced by the addition is filtered by the high-frequency band extraction and suppression filter 42 which somewhat suppresses a component of higher than about 6 kHz, thereby providing a speech sound easy to listen to. The filter factor of the filter 42 is selectable as having been described.

Further at step S12, the multiplier 43 is used to adjust the gain of the high-frequency band of the speech sound according to the user's taste.

The preparation of a code book for use in the signal selector 32 will be described herebelow:

Code book preparation is made by the well-known GLA (generalized Lloyd algorithm) method. In this method, a wide-band speech sound is divided into frames each lasting for a predetermined length of time, 20 msec, for example. Autocorrelations up to a predetermined order, for example, up to a sextic order, are determined for each of the frames. An autocorrelation of each frame is used as a training date to prepare a sextic-order code book. For this purpose, the wide-band speech sound is judged to a voiced or unvoiced one, voiced sound (V) autocorrelations and unvoiced sound (UV) autocorrelations may be collected separately to prepare code books for the voice and unvoiced sounds, respectively. In this case, the code books are referred to during band widening of the linear predictive filter factor $\alpha$. Also in this case, the speech sound is judged to be a voiced or unvoiced one and a corresponding code book is used.

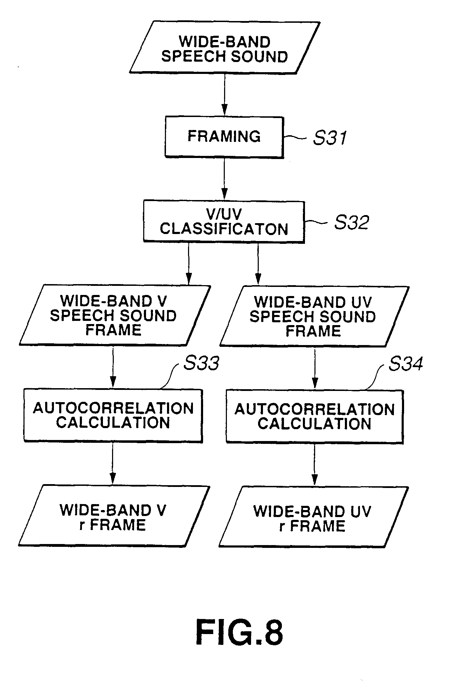

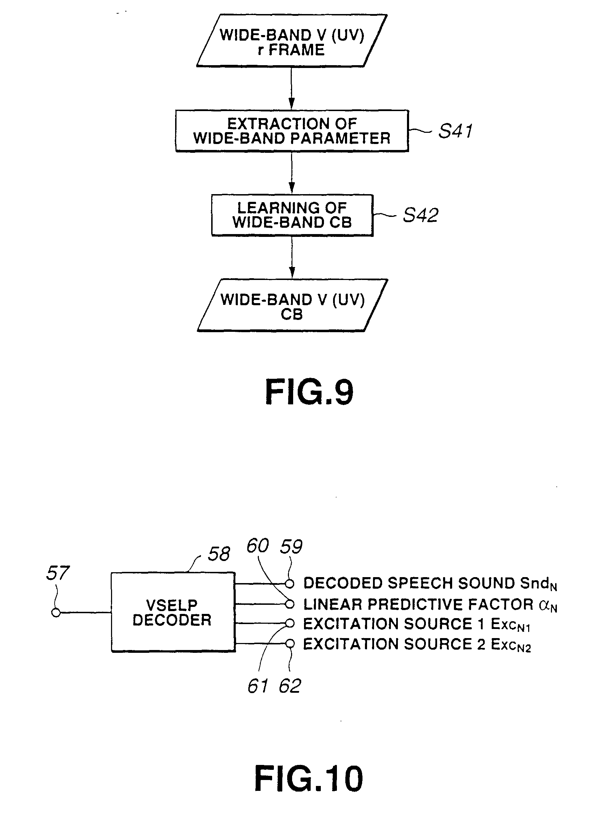

In the signal selector 32, both the wide-band voiced and unvoiced sound code books are used. These wide-band voiced (V) and unvoiced sound (UV) code books are prepared as will be described below with reference to FIGS. 8 and 9, respectively.

First a wide-band speech sound is produced for learning, and at step S31 in FIG. 8, the speech sound is divided into frames each having a period of 20 msec. Next at step S32, each frame is examined for its energy and zero-cross value to judge whether it is a voiced or unvoiced sound.

At step S33, autocorrelation parameters $\underline{r}$ are calculated up to sextic order, for example, for the wide-band voiced sound frames. At step S34, autocorrelation parameters $\underline{r}$ are calculated up to sextic order, for example, fro the wide-band unvoiced sound frames.

At step S41 in FIG. 9, wide-band parameter is extracted from the primary- to sextic-order autocorrelation parameters of each frame. At step S42, the GLA method is used to prepare wide-band voiced and unvoiced sound code books of the primary to sextic orders.

As mentioned above, the wide-band voiced and unvoiced sounds code books can be prepared.

The noise reducer functions as will be described below:

The frame power calculation circuit 142 as shown in FIG. 6 is provided to calculate a mean power rms of the aforementioned decoded speech sound signal $Snd_N$ per frame. The mean power rms is supplied to the scale calculation circuit 143.

The scale calculation circuit 143 compares the mean power rms with a certain threshold nr1, and calculates a scale based on the result of the calculation. It is assumed that when the mean power nns is larger than the threshold nr1, the scale is 1 but while the scale is smaller than the threshold nr1, the scale is as follows:

$$scale = rms/K \tag{5}$$

where K is a constant (in this example, K = nr1).

Otherwise, the expression (5) is calculated for all the mean powers nns. If the result of the calculation shows that the scale is smaller than 1 (scale < 1), the scale calculated using the expression (5) is multiplied by the decoded speech sound $Snd_N$. This means that for a frame of which the mean power nns is smaller than the threshold rn1, the decoded speech sound signal $Snd_N$ is multiplied by a gain smaller than 1. If the calculation result shows that the scale is larger than 1 (scale ≥ 1), the decoded speech sound signal $Snd_N$ is provided as an output without being further processed. Therefore, by selecting an appropriate value for the threshold nrl, the gain can be controlled to be small for a sound portion whose power is small, such as a noise, which will result in a substantial noise reduction. Note that the noise suppression using the expression (5) has a half effect for the mean power of input signals.

In case the noise suppression is too much or a noise suppression is done in combination with a muting by a circuit which mutes a lower noise than a predetermined level, a second threshold nr2 smaller than the above threshold nrl (first threshold) should be set to attain a low suppression for a sound part in which the input level is smaller than the second threshold nr2, namely, to weaken the effect of the band widening circuit.

Since an input signal is processed with its sound and noise not separated, there is a tendency that a part of the input signal whose sound power is relatively small such as consonant will not be provided as a sound. This tendency will be enhanced if an input signal is subjected to a specially strong noise reduction, which will cause some kinds of speech sound to be heard rather different from their originality. Therefore, it is necessary to consider how strongly an input signal should be noise-reduced with respect to a mean frame power and how large a sound to be subjected to noise reduction should be.

If the above processing is done in frames, speech sound frames will be discontinuous, which will result in something unnatural when the user listens to the sound.

Taking the above in consideration, an attack time and recovery time should be set for the scale in order to smooth each frame, for example, in order to provide a natural sound.

That is, as apparent from FIG. 6, the scale calculated by the scale calculation circuit 143 is smoothed once by the smoothing circuit 144 and supplied to the noise-reduction circuit 145.

The smoothing circuit 144 is provided to solve the above-mentioned possible problems taking place in the process of noise reduction. An attack time and recovery time are set for this purpose. The attack time is "0" while the recovery time is variable.

That is, when a calculated sound power of a present frame is larger than that of a preceding frame, it is used as it is. When it is smaller than that of the preceding frame, it is smoothed by a lowpass filter (LPF) having a predetermined characteristic to avoid the above-mentioned unnatural feeling due to the variation of the frame power.

The noise reduction circuit 145 reduces the noise of an input signal $Snd_N$ by multiplying the decoded speech sound signal $Snd_N$ by a scale supplied through the smoothing circuit 144, and delivers an output signal with less noise at an outer terminal 146 thereof.

The scale calculation circuit 143 is supplied with a control signal produced through discrimination by the level discrimination circuit 147 of a noise level detection signal supplied via the terminal 148. Based on the control signal, a threshold is selected for the above-mentioned calculation of a scale. That is, the threshold for the scale calculation is based on the noise level detection signal.

The noise level detection signal is a sound level of a background noise part detected from the speech sound parameter code based on a signal transmitted from the transmitter to produce a speech sound signal whose sampling rate is the first sampling rate $f_{s1}$.

For the above purpose, there should be provided a noise part detection circuit to detect a background noise part from the speech sound parameter code, and a noise level detection circuit to detect the noise level of the noise part detected by the noise part detection circuit. Neither the noise part detection circuit nor noise level detection circuit are shown. A noise level detection signal produced by the noise level detection circuit is delivered at the terminal 148.

The noise reducer uses a signal transmitted from the transmitter to produce the speech sound signal whose sampling rate is the first sampling rate $f_{s1}$ (8 kHz) in order to reduce the noise of the decoded speech sound at the circuit 47 for the first process of noise reduction (a). The circuits 48 and 49 for the second process of noise reduction (b) and third process of noise reduction (b), respectively, actually reduce the noise of a speech sound whose sampling rate is the second sampling rate $f_{s2}$ of 16 kHz. Therefore, in the noise reducer, the circuits 48 and 49 for the second process of noise reduction (b) and third process of noise reduction (b), respectively, are provided to apply the first process of noise reduction (a) (in the circuit 47) to a sample having a speech frequency which is two times (= $f_{s2}/f_{s1}$) higher than the speech frequency of the speech sound signal having a speech frequency included in the first band $B_1$

or wide band $B_W$ and whose sampling rate is the second sampling rate $f_{s2}$ of 16 kHz.

Thus, the noise reducer can reduce noise component in the decoded speech sound signal by the circuit 47 for the first process of noise reduction (a), and noise component in a speech sound signal having a speech frequency included in the first band $B_1$ and wide band $B_W$ and whose sampling rate is the second sampling rate $f_{s2}$ of 16 kHz by the circuit 48 or 49 for the second process of noise reduction (b) or third process of noise reduction (b), respectively.

The signal selector 32 in FIG. 4 can send to the D/A converter 6 one of speech sound signals whose noise having been reduced by the circuits 47, 48 and 49 for the first, second and third processes of noise reduction (a), (b) and (b), respectively, namely, a speech sound signal having a speech frequency included in the first band $B_1$ (300 to 3,400 Hz) and whose sampling rate is the sampling rate of 8 kHz, a speech sound signal having a speech frequency included in the first band $B_1$ (300 to 3,400 Hz) and whose sampling rate is the sampling rate of 16 kHz, and a wide-band speech sound signal having a speech frequency included in the wide band $B_W$ (300 to 6,000 Hz) and whose sampling rate is the sampling rate of 16 kHz, as selected by the selection switch 150.

Therefore, the receiver 1 shown in FIG. 1 reduces the noise in received speech sound signals processed by the PSI-CELP method and having speech frequencies included in the first band $B_1$ (300 to 3,400 Hz) and whose sampling rates are different from each other (8 kHz and 16 kHz), respectively, and in a received speech sound signal processed by the PSI-CELP method and having a speech frequency included in the wide band (300 to 6,000 Hz) and whose sampling rate is 16 kHz, before the signal is selected by the user. Thus the user can have a wide choice of speech sounds. Also, a received speech sound signal can be widened in speech frequency band depending upon the situations, and processed to have a same band as when it is entered, so that the incorporated battery can be prevented from being much consumed.

Note that the sampling rate may be fixed at 16 kHz for the D/A converter 6 and one of the speech sound signals having speech frequencies included in the first band $B_1$ and in the wide band $B_W$ may be selected with the sampling rate kept fixed at 16 kHz. Since the clock used in the D/A converter 6 may not be changed for each of the sampling frequencies 8 and 16 kHz, no hardware may be provided for this clock change.

In the up-sampling circuit 45, the filter output is cleared when the selection switch 150 is shifted between the positions for sampling frequencies of 8 and 16 kHz, in order to prevent noise from taking place.

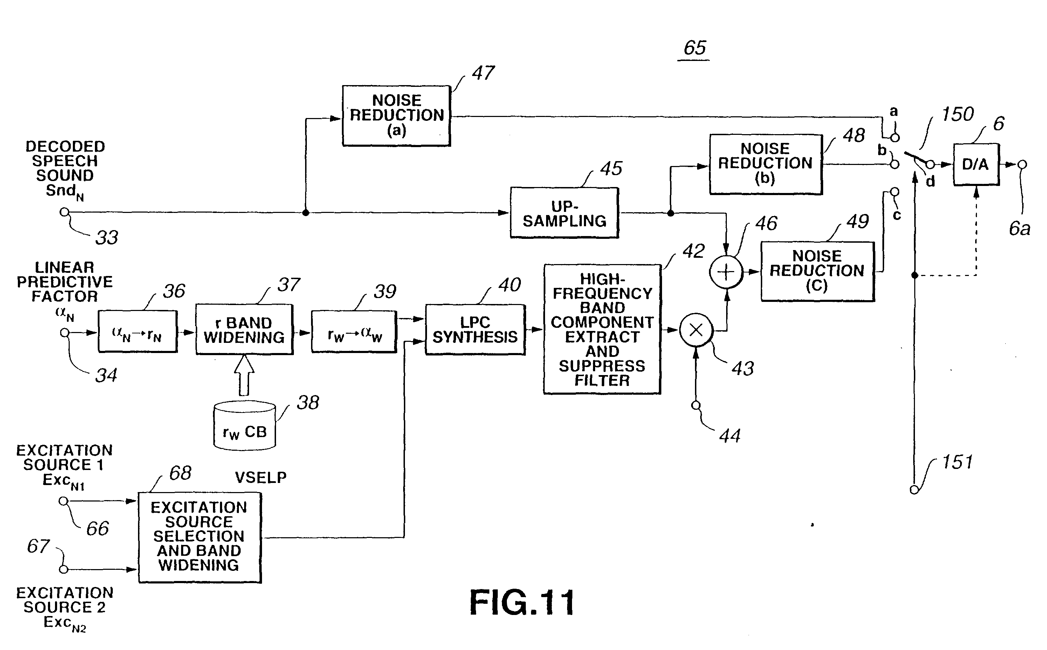

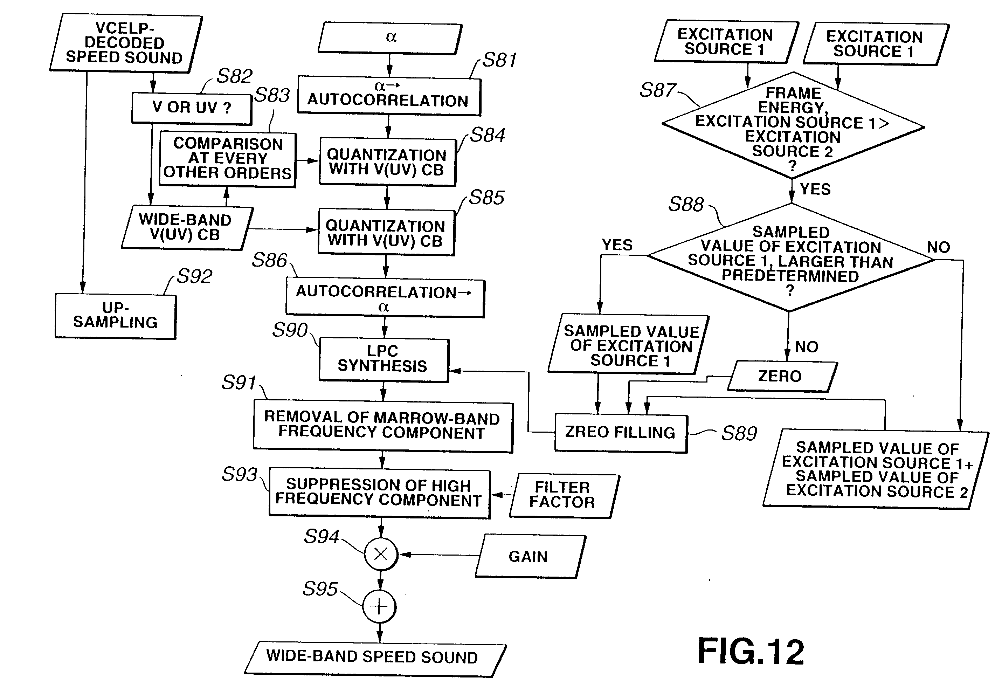

A variant of the signal processor 5 provided in the receiver 1 shown in FIG. 1 will be described below with reference to FIGS. 10 to 12. FIG. 10 shows a VSELP decoder included in a variant of the signal selector provided in the receiver shown in FIG. 1, FIG. 11 is a block diagram of a signal selector included in a variant of the signal processor provided in the receiver shown in FIG. 1, and FIG. 12 is a detailed flow chart of the operations of the signal selector shown in FIG. 1. This signal processor 5 has a decoder 58 shown in FIG. 10 and a signal selector 65 shown in FIG. 11.

When the coding method adopted in the speech sound encoder in the signal processor 21 of the transmitter 15 shown in FIG. 2 is VSELP (vector sum excited linear prediction), the decoder 58 will decode a speech sound signal coded by the VSELP for transmission and deliver a decoded speech sound $Snd_N$ at an output 59, a linear predictive filter factor $\alpha_N$ at an output terminal 60, an excitation source 1 $Exc_{N1}$ at an output terminal 61, and an excitation source 2 $Exc_{N2}$ at an output terminal 62.

The signal selector 65 is constructed as shown in FIG. 11, similar to the signal selector 32 shown in FIG. 4 except that there is provided an excitation source selection and band widening circuit 68.

In the PSI-CELP method, the codec processes a voiced sound, among others, to be acoustically smooth. In the VSELP method, however, this process is not effected, so that a speech sound whose band is widened will be heard as if it includes some noise. To avoid this, the excitation source selection and band widening circuit 68 is used to process the signal as shown in FIG. 12 for generation of a wide-band excitation source. The excitation source selection and band widening circuit 68 incorporates an excitation selection circuit. In the flow chart shown in FIG. 12, steps S87 to S89 replace the excitation source processing shown in FIG. 6.

The excitation source for VSELP is produced as follows:

$$\beta * bL[i] + \gamma * cl[i]$$

where $\beta$ is a parameter used in the codec (long-term predictive factor), $bL[i]$ is a long-term filter state, $\gamma$ is a gain and $cl[i]$ is an excitation code vector. The former term of the above expression represents a pitch component while the latter term represents a noise component. So, the excitation source is divided into two parts $\beta * bL[i]$ and $\gamma * cl[i]$. If it is judged at step S87 that in a predetermined range of time, the energy of the former part is large, the excitation source may be considered to be a voice sound having a strong pitch. Thus, if it is judged at step S88 that the sampled value of the excitation source 1 is larger than a predetermined value (YES), the excitation source is a pulse train. If it is judged that there is no pitch component (NO), the excitation source is suppressed to zero. If it is judged at step S87 that the energy of the former term (pitch component) is not large, the conventional procedure will be effected. At step S89, a narrow-band excitation source thus produced is up-sampled by filling zeros as in the PSI-CELP method, thereby providing a wide-band excitation source. Thus, the acoustic quality of the voiced sound will be improved in the VSELP method.

At step S95, the wide-band excitation source is added by the adder 46 to the original speech sound $Snd_N$ having been up-sampled by the up-sampling circuit 45 at step S92. At step S91, the high frequency band of the speech sound produced by the addition is filtered by the high-frequency band extraction and suppression filter 42 which somewhat suppresses a component of higher than about 6 kHz, thereby providing a speech sound easy to listen to. The filter factor of the filter 42 is selectable as having been described.

Further at step S93, the multiplier 43 is used to adjust the gain of the high-frequency band of the speech sound according to the user's taste.

Also the signal selector 65 has a noise reducer which composed of the circuits 47, 48 and 49 for first, second and third processes of noise reduction (a), (b) and (b), respectively. The circuit 47 for first process of noise reduction (a) can reduce noise component in the decoded speech sound signal, and the circuits 48 and 49 for second and third processes of noise reduction (b) can reduce noise component in a speech sound signal included in the first band $B_1$ and wide band $B_W$ of the second sampling rate $f_{s2}$ of 16 kHz.

Therefore, the signal selector 65 using the VSELP decoding method can also send to the D/A converter 6 a speech sound signal having a speech frequency included in the first band $B_1$ (300 to 3,400 Hz) and whose sampling rate is 8 kHz, a speech sound signal having a speech frequency included in the first band $B_1$ and whose sampling rate is 16 kHz, and a wide-band speech sound signal having a speech frequency included in the wide band $B_W$ and whose sampling rate is 16 kHz, as selected by the selection switch 150.

Therefore, the receiver 1 shown in FIG. 1 reduces the noise in a received speech sound signal processed by the VSELP method, having a speech frequency included in the first band $B_1$ (300 to 3,400 Hz) and whose sampling rates are different (8 kHz or 16 kHz), and in a received speech sound signal processed by the VSELP method, having a speech frequency included in the wide band (300 to 6,000 Hz) and whose sampling rate is 16 kHz, before the signal is selected by the user. Thus the user can have a wide choice of speech sounds. Also, a received speech sound signal processed by the VSELP method can be widened in speech frequency band depending upon the situations, and processed to have a same band as when it is entered, so that the incorporated battery can be prevented from being much consumed.

Also in the signal selector 65 using the VSELP decoding method, a speech sound parameter code recorded in the memory 13 during the message recording mode can be used when reproducing a recorded message to produce a wide-band speech sound of a high quality whose sampling rate is converted from 8 kHz to 16 kHz.

A speech sound parameter code of 8 kHz in sampling rate is recorded in the memory 13, and a wide-band speech sound of 16 kHz in sampling rate is reproduced. Thus, a message speech sound can be recorded with a reduced recording capacity and reproduced with a high quality.

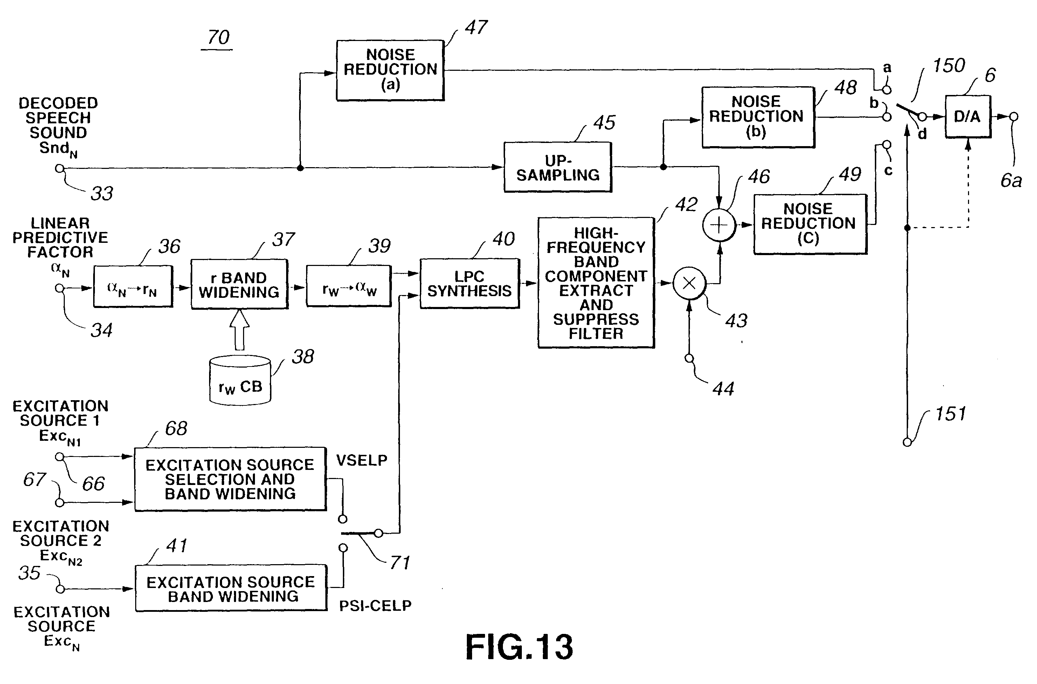

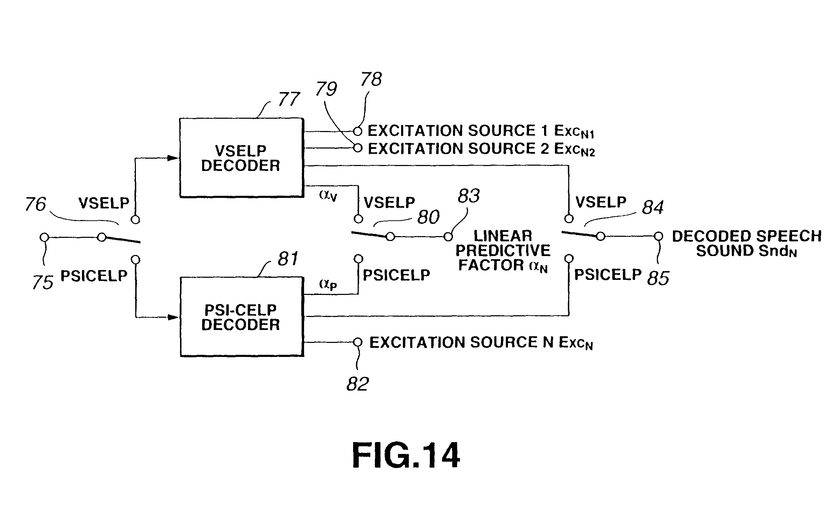

Referring now to FIG. 13, there is illustrated in the form of a block diagram a signal selector included in another variant of the signal processor provided in the receiver shown in FIG. 1. FIG. 14 is also a block diagram of a decoder included in a still another variant of the signal processor provided in the receiver shown in FIG. 1. The signal processor 5 incorporated in the receiver 1 shown in FIG. 1 may comprise a signal selector 70 shown in FIG. 13 and a decoder shown in FIG. 14. It is taken herein as another variant.

The decoder shown in FIG. 14 consists of a VSELP decoder 77 and PSI-CELP decoder 81. According to the method, VSELP or PSI-CELP, by which a speech sound parameter code transmitted from the transmitter has been coded, the speech sound parameter code is supplied to either the VSELP decoder 77 or PSI-CELP decoder 81. Namely, the speech sound parameter code received via the input terminal 75 is switched from one to another by the selection switch 76 according to the kind of encoding method, VSELP or PSI-CELP.

Two excitation sources 1 $Exc_{N1}$ and 2 $Exc_N$ from the VSELP decoder 77 are supplied to input terminals 66 and 67, respectively, via output terminals 78 and 79. An excitation source N $Exc_N$ from the PSI-CELP decoder 81 is supplied to an input terminal 35 shown in FIG. 13 via output terminal 82.

A linear predictive filter factor $\alpha_V$ or $\alpha_P$ from the VSELP decoder 77 or PSI-CELP decoder 81 is selected by a selection switch 80 according to the coding method by which the speech sound has been coded and then supplied to input terminal 34 in FIG. 13 via output terminal 83.

Similarly, a decoded speech sound from the VSELP decoder 77 or PSI-CELP decoder 81 is selected by a selection switch 84 according to the coding method by which the speech sound has been coded and then supplied to input terminal 33 in FIG. 13 via output terminal 85.

In the signal selector 70 shown in FIG. 13, excitation source output from the excitation source selection and band widening circuit 68 or excitation source band widening circuit 41 is selected by a selection switch 71 settable according to the coding method and supplied to the LPC synthesis circuit 40.

Also the signal selector 70 has a noise reducer which composed of the circuits 47, 48 and 49 for first, second and third processes of noise reduction (a), (b) and (b), respectively. The circuit 47 for the first process of noise reduction (a) can reduce noise component in the decoded speech sound signal, and the circuits 48 and 49 for the second and third processes of noise reduction (b) can reduce noise component in a speech sound signal having a speech frequency included in the first band $B_1$ and wide band $B_W$ and whose second sampling rate $f_{s2}$ is 16 kHz.

Therefore, according to the kind of coding method by which a signal transmitted from the transmitter has been coded, the signal selector 70 reduces the noise in a received speech sound signal having a speech frequency included in the first band $B_1$ (300 to 3,400 Hz) and whose sampling rates are different from each other (8 kHz or 16 kHz), and in a received speech sound signal having a speech frequency included in the wide band (300 to 6,000 Hz) and whose sampling rate is 16 kHz, before the signal is selected by the user. Thus the user can have a wide choice of speech sounds. Also, a received speech sound signal can be widened in band depending upon the situations, and processed to have a same band as when it is entered, so that the incorporated battery can be prevented from being much consumed.

Also the signal selector 70 can produce a wide-band speech sound whose sampling rate is converted from 8 to 16 kHz using, during the message reproduction mode, a speech sound parameter code having been recorded in the memory 13 during the message recording. More particularly, a speech sound parameter code recorded in the memory can be used to provide a quality wide-band speech sound whose sampling rate is set two tunes higher (to 16 kHz) by widening the band according to the coding method by which the signal transmitted from the transmitter has been coded.

Furthermore, the signal processor 5 in the receiver 1 shown in FIG. 1 may comprises a signal selector 90 as shown in FIG. 14. This signal selector 90 can also read a speech sound parameter code recorded in the memory 13 shown in FIG. 1 during the message recording and shown in Tables 1 and 2 to reproduce a wide-band speech sound of which the sampling rate is 16 kHz at the time of message reproduction.

An excitation source being an LPC residual read from the memory 13 is supplied to input terminal 91 of the signal selector 90. Also, a linear predictive filter factor $\alpha$ read from the memory 13 is supplied to input terminal 92. The excitation source from the input tenninal 91 is sent to an LPC synthesis filter 93 and up-sampling circuit 100. A linear predictive filter factor from an input terminal 92 is sent to the LPC synthesis filter 93.

The LPC synthesis filter 93 will use the linear predictive filter factor from input terminal 92 to synthesize a speech sound signal based on the excitation source from input tenninal 91. The synthesized signal from the LPC synthesis filter 93 is supplied to a circuit 161 for the first process of noise reduction (a) and up-sampling circuit 94 in the noise reducer.

The circuit 161 for the first process of noise reduction (a) functions similarly to the circuit 47 for the first process of noise reduction (a), and so will not further be described.

The up-sampling circuit 94 up-samples the sampling rate $f_{s1}$ of the speech sound signal produced by the LPC synthesis filter 93. The up-sampled speech sound signal is supplied to a circuit 162 for the second process of noise reduction (b) and bandpass filter (BPF) 95 of the noise reducer.

The circuit 162 for the second process of noise reduction (b) works similarly to the circuit 48 for the second process of noise reduction (b). Namely, it applies the first process of noise reduction (a) of the circuit 161 of the noise reducer having a similar construction to that shown in FIG. 6 to a sample whose sampling rate is 16 kHz which is two times (= $f_{s2}/f_{s1}$) higher than that of a speech sound signal having a speech frequency included in the first band $B_1$ or wide band $B_W$.

The bandpass filter (BPF) 95 passes only a signal included in a predetermined band of the output from the up-sampling circuit 94 and supplies it to an adder 96. The path leading to the up-sampling circuit 94, bandpass filter 95 and adder 96 is a one along which a signal of a component included in the original speech frequency band is added to a synthesized speech sound signal.

Also, a linear predictive filter factor is sent from the LPC synthesis filter 93 to a linear predictive filter factor/autocorrelation ($\alpha$/r) converter 97 which will converts the linear predictive filter factor to an autocorrelation. The autocorrelation is sent to a narrow-band code book 98, and also to an affricate detector 99.

Also, an excitation source from the input terminal 91 is up-sampled by an up-sampling circuit 100, and sent to an LPC synthesis filter 103 through a lowpass filter 101 and booster 102. The booster 102 is provided to boost the excitation source when an affricate or fricative is detected. The boosting rate of the booster 102 is controlled based on an output from the affricate detector 99.

The narrow-band code book 98 stores as code vectors autocorrelations of narrow-band speech signal, previously obtained from a plurality of speech sound signal patterns. In the narrow-band code book 98, an autocorrelation from the $\alpha$/r converter 97 is compared with autocorrelation information in the code book 98 to match them with each other. The index of one of the autocorrelation information that is judged to most match the autocorrelation from the converter 97 is sent to a wide-band code book 104.

Correspondingly to the narrow-band code book 98, the wide-band code book 104 stores as code vectors autocorrelation information of a wide-band speech signal, obtained from a speech sound having the same pattern as that used when the narrow-band code book 98 has been produced. The index of one of the autocorrelation information in the narrow-band code book 98 that is judged to most match the autocorrelation from the converter is sent to the wide-band code book 104 from which wide-band autocorrelation information corresponding to the narrow-band autocorrelation information judged to most match the autocorrelation will be read.

The wide-band autocorrelation information read from the wide-band code book 104 is sent to the autocorrelation/linear predictive filter factor (r/$\alpha$) converter 105 which will convert the autocorrelation to a linear predictive filter factor. The linear predictive filter factor is sent to an LPC synthesis filter 103.

The LPC synthesis filter 103 provides an LPC synthesis to synthesize a wide-band speech sound signal which will be supplied to a high frequency band extraction and suppression filter 106 and multiplier 107.

The high-frequency band extraction and suppression filter 106 removes from the synthesized output from the LPC synthesis filter 103 a signal component of 300 to 3,400 Hz of the input narrow-band speech sound signal, extracts a signal component of higher than 3,400 Hz, and suppresses the high frequency components according to the user's taste. The multiplier 107 multiplies an output from the high-frequency band extraction and suppression filter 106 by an adjusted gain from an output 108.

The adder 96 adds to a multiplication output from the multiplier 107 an original narrow-band speech sound signal component having been passed through the bandpass filter (BPF) 95 to provide a wide-band speech sound signal. The wide-band speech sound signal is supplied to a circuit 163 for the third process of noise reduction (b) included in the noise reducer.

The circuit 163 for the third process of noise reduction (b) works similarly to the circuit 49 for the third process of noise reduction (b). Namely, similarly to the circuit 162 for the second process of noise reduction (b), it applies the first process of noise reduction (a) of the circuit 161 of the noise reducer having a similar construction to that shown in FIG. 6 to a sample whose sampling rate is 16 kHz which is two times (= $f_{s2}/f_{s1}$) higher than that of a speech sound signal having a speech frequency included in the wide band $B_W$.

An output from the circuit 161 for the first process of noise reduction (a), output from the circuit 162 for the second process of noise reduction (b), and an output from the circuit 163 for the third process of noise reduction (b) are supplied to selectable terminals a, b and c, respectively, of a selection switch 109.

More specifically, the selection switch 109 will receives at the selectable terminal $\underline{a}$ thereof a speech sound signal having a speech frequency included in the first band $B_1$ (300 to 3,400 Hz) and whose sampling rate is the first sampling signal $f_{s1}$ of 8 kHz and having been noise-reduced, at the selectable terminal $\underline{b}$ a speech sound signal having a speech frequency included in the first band $B_1$ (300 to 3,400 Hz) and whose sampling rate is the second sampling signal $f_{s2}$ of 16 kHz and having been noise-reduced, and at the selectable terminal $\underline{c}$ a speech sound signal having a speech frequency included in the first band $B_W$ (300 to 6,000 Hz), whose sampling rate is the second sampling signal $f_{s2}$ of 16 kHz and having been noise-reduced. The selection switch 109 has also a selection piece $\underline{d}$. By moving the selection piece $\underline{d}$ according to a selection control signal from a selection control signal terminal 129, the selection switch 109 supplies to the D/A converter 6 with a speech sound signal having been noise-reduced in one of the manners described in the above.

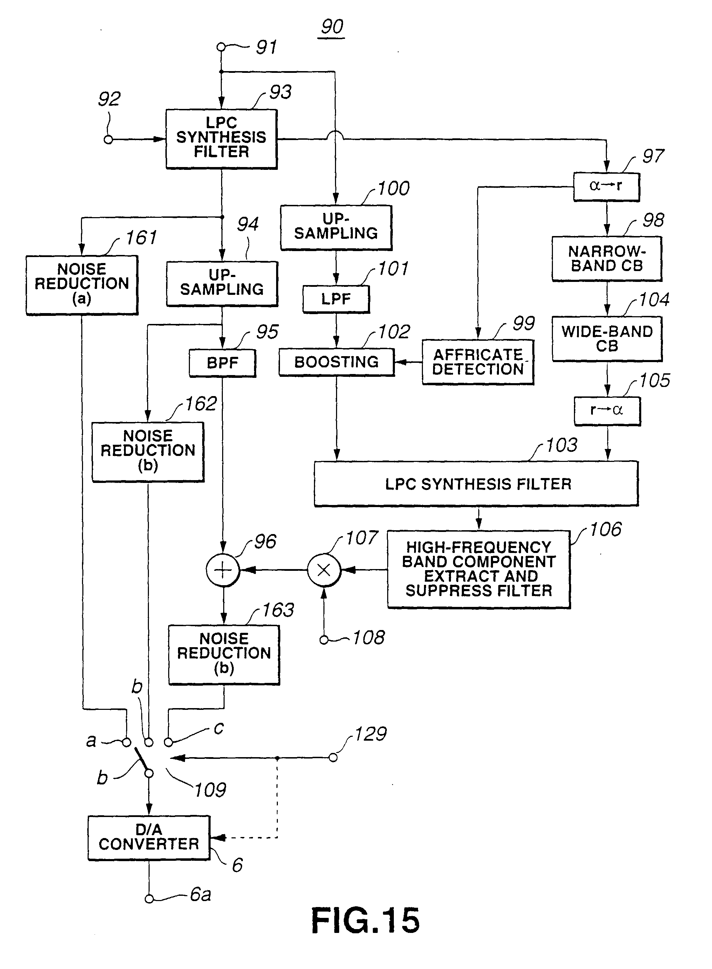

Referring now to FIG. 15, there is illustrated, in the form of a block diagram, a signal selector 90 included in a yet another variant of the signal processor provided in the receiver shown in FIG. 1. As having been described in the above, the receiver comprising the signal selector 90 shown in FIG. 15 permits the user to select any one of received speech sound signals having speech frequencies included in the first band $B_1$ of 300 to 3,400 Hz and whose sampling rates are different from each other (8 kHz and 16 kHz), and a received speech sound signal having a speech frequency included in a wide band of 300 to 6,000 Hz and whose sampling rate is 16 kHz, both having been noise-reduced.

Note that the signal processor 5 in the receiver 1 may comprise, within each of the signal selectors 32, 65, 70 and 90, a post-filter connected downstream or upstream of each process of noise reduction.

The post-filter provides a post-filtering intended to subject each speech sound signal to spectrum shaping and acoustic quality improvement by the technique applied in the speech sound decoding method and apparatus disclosed in the Japanese Unexamined Patent Publication No. 9-127996 of the Application of the present invention.

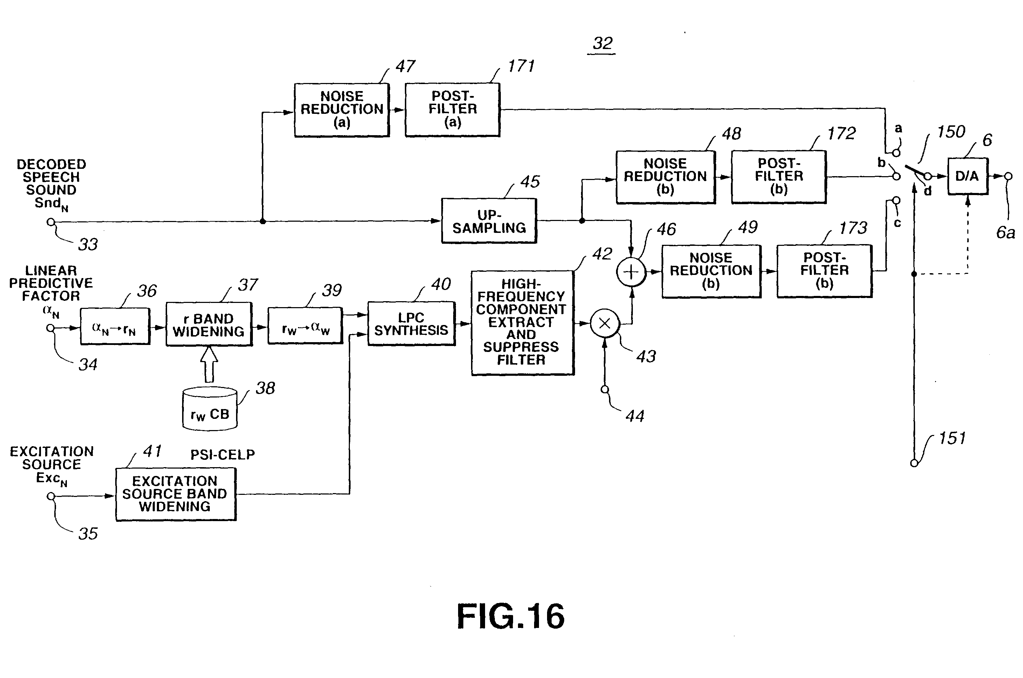

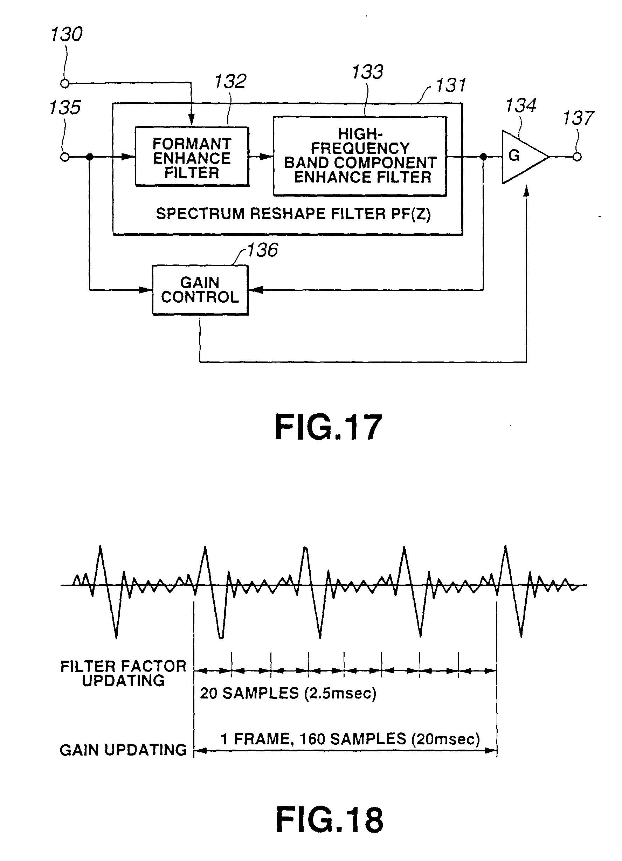

Referring now to FIG. 16, there is given a block diagram of the noise reducer provided in the signal selector 32 shown in FIG. 4, having a post-filter connected downstream thereof. As shown, the signal selector 32 comprises a circuit 171 for the first process of post-filtering (a), circuit 172 for the second process of post-filtering (b) and a circuit 173 for the third process of post-filtering (b), connected downstream of the circuit 47 for the first process of noise reduction, circuit 48 for the second process of noise reduction (b) and the circuit 49 for the third process of noise reduction (b), respectively, and in which the speech sound decoding method and apparatus are applied. FIG. 17 is a detailed block diagram of the post-filter included in the signal selector shown in FIG. 16.

As shown in FIG. 17, the post-filter includes a spectrum shaping filter 131 as an essential part thereof. The spectrum shaping filter 131 comprises a formant enhancing filter 132 and a high-frequency band enhancing filter 133. An output from the spectrum shaping filter 131 is sent to a gain controller 134 which corrects a gain variation caused by a spectrum shaping. The gain of the gain controller 134 is determined by a gain control circuit 136. The gain control circuit 136 calculate a gain variation by comparing an input to, and an output from, the spectrum shaping filter 131, and provides a correction value for gain G of the gain controller 134. The input to the spectrum shaping filter 131 is a decoded speech sound signal $Snd_N$ of which the noise has been reduced by the circuit 47 for the first process of noise reduction (a), and the output from the spectrum shaping filter 131 is an output from the post-filter, delivered at a terminal 137.

The post-filter works as will be described in detail below.

The characteristic PF(Z) of the spectrum shaping filter 131 in FIG. 17 can be expressed as follows using the linear predictive filter factor αi:

$$PF(z) = \frac{\sum\limits_{i=0}^{P} \alpha_i \beta^i z^{-1}}{\sum\limits_{i=0}^{P} \alpha_i \gamma^i z^{-i}} \left[ 1 - kz^{-1} \right] \qquad \ldots\ldots\ldots\ldots\ldots\ldots\ldots\ldots \quad (6)$$

where β, γ and k are constants being 0.6, 0.8 and 0.3, for example. Of the expression (6), the fraction represents the characteristic of the formant enhancing filter 132 and the part of $[1-kz^{-1}]$ represents the characteristic of the high-frequency band enhancing filter 133.

The gain G of the gain control circuit 134 can be expressed as follows:

$$G = \sqrt{\frac{\sum\limits_{i=0}^{159} x^2(i)}{\sum\limits_{i=0}^{159} y^2(i)}} \qquad \ldots\ldots\ldots\ldots\ldots\ldots\ldots\ldots\ldots\ldots\ldots \quad (7)$$

where x(i) is an input to the spectrum shaping filter 131, namely, the input wide-band speech sound signal Snd$_W$, and y(i) is an output from the spectrum shaping filter 131.

Referring now to FIG. 18, there is explained a filter factor updating period and gain updating period of the post-filter. As shown, the factor updating period for the spectrum shaping filter 131 is the factor ($\alpha_W$) updating period for the LPC synthesis circuit 40, namely, 20 samples (2.5 msec), while the gain (G) updating period for the gain control circuit 134 is 160 samples (20 msec).

Thus, the gain (G) updating period for the gain control circuit 134 is set longer than the factor updating period for the spectrum shaping filter 131 of the circuit 171 for the first post-filtering (a) to prevent adverse affect of the gain variation.

Namely, in the ordinary post-filter, the factor updating period for the spectrum shaping filter is the same as the gain updating period for the gain control circuit. On the assumption that the gain updating period is 20 samples (2.5 msec), the gain varies in one pitch period, causing a click noise. By setting a longer gain updating period, for example, 160 samples (20 msec) for one frame, it is possible to prevent the gain from varying in the post-filter. If the factor updating period for the spectrum shaping filter 131 is set longer as 160 samples (20 msec), the characteristic of the post-filter cannot catch up with the variation of the speech sound spectrum within a short time, so that no acoustic quality improvement can be attained. However, setting the filter factor updating period as short as 20 samples (2.5 msec) will provide an effective post-filtering.

The circuit 171 for the first process of post-filtering (a) is used to process a speech sound parameter code (α, for example) based on a signal transmitted from the transmitter to produce a speech sound signal whose sampling rate is the first sampling rate f$_{s1}$ of 8 kHz. The circuit 172 for the second process of post-filtering (b) and circuit 173 for the third process of post-filtering (b) are used to process a speech sound signal whose sampling rate is the second sampling rate f$_{s2}$ of 16 kHz. Namely, the circuit 172 for the second process of post-filtering (b) and circuit 173 for the third process of post-filtering (b) are actually used to apply the first process of post-processing shown in FIG. 17 to a speech sound signal whose sampling rate is 16 kHz which is two times (= f$_{s2}$/f$_{s1}$) higher than the first sampling rate of 8 kHz.

The first post-filtering permits to effectively improve the spectrum shape and acoustic quality of the decoded speech sound signal having been noise-reduced. Also, the circuits 172 and 173 for the second and third processes of post-filtering (b), respectively, can effectively improve the spectrum shape and acoustic quality of the speech sound signals having speech frequencies included in the first band B$_1$ and wide band B$_W$, having been noise-reduced and whose sampling rate is the sampling rate f$_{s2}$ of 16 kHz.

Thus, the signal selector 32 shown in FIG. 16 can send through the selection switch 150 to the D/A converter 6 speech sound signals whose the noise has been reduced by the circuits 47, 48 and 49 for the first, second and third processes of noise reduction (a), (b) and (b), respectively, and spectrum shape and acoustic quality have effectively been improved by the circuits 171, 172 and 173 for the first processes of post-filtering (a), (b) and (b), respectively, that is, any one, selected as necessary, of a speech sound signal having a speech frequency included in the first band $B_1$ of 300 to 3,400 Hz and whose sampling rate $f_{s1}$ is 8 kHz, a speech sound signal having a speech frequency included in the first band $B_1$ of 300 to 3,400 Hz and whose sampling rate is 16 kHz, and a wide-band speech sound signal having a speech frequency included in the wide band $B_W$ of 300 to 6,000 Hz and whose sampling rate is 16 kHz.

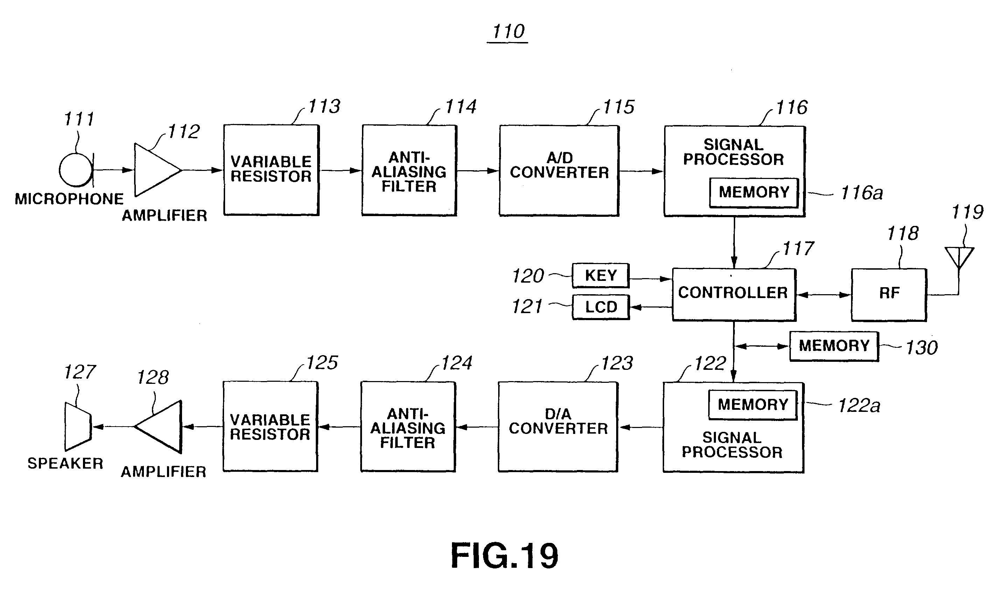

Note that the receiver using a signal processing comprising the signal selector 32, 65, 70 or 90 may be formed integrally with the transmitter to provide a mobile telephone shown in FIG. 19. FIG. 19 is a block diagram of the mobile telephone. The mobile telephone is generally indicated with a reference 110. The mobile telephone 110 is applicable as PDC to a currently prevailing digital mobile telephone. The mobile telephone 110 has such a telephone answering function that the speech sound parameter code is recorded in recording medium such as a semiconductor memory, magnetic tape or the like, it is read from the recording medium and a speech sound transmitted and automatically recorded during the automatic message recording mode can be reproduced using the second sampling rate $f_{s2}$.

In the mobile telephone 110, a speech sound signal entered from a microphone 111 is passed through an amplifier 112, variable resistor 113, anti-aliasing filter 114 and A/D converter 115 and then stored into a memory 116a of a signal processor 116.

The speech sound signal stored in the memory 116a is coded by a speech sound encoder in the signal processor 116 to provide a speech sound parameter code.

The speech sound parameter code is transmitted to the base station via a controller 117, RF transmission amplifier 118 and an antenna 119.

The speech sound encoder in the signal processor 116 supplies the speech sound parameter code to the RF amplifier 118 via the controller 117 taking in consideration a band narrowing depending upon a transmission path whose bandwidth is limited.

Also, the speech sound parameter code received via the antenna 119 from the base station is passed through the RF amplifier 118 and controller 117 and then stored into a memory 112a in a signal processor 122.

The speech sound parameter code stored in the memory 112a of the signal processor 122 is decoded by a decoder of the signal processor 122 and then processed in a predetermined manner before it is provided as an output. Also, when a received speech sound automatically recorded in the automatic message recording mode is reproduced, the speech sound parameter code stored in the memory 130 is decoded by the decoder of the signal processor 122 and processed in the predetermined manner before it is provided as an output.

The output signal from the signal processor 122 is converted to an analog signal by a D/A converter 123, passed through an anti-aliasing filter 124, variable resistor 125 and amplifier 128, and then provided as an output from a speaker 127.

The signal processor 122 comprises the aforementioned signal selector 32, 65, 70 or 90. Therefore, the mobile telephone 110 shown in FIG. 19 can effectively improve the spectrum shape and acoustic quality of a wide-band speech sound signal whose sampling rate has been doubled in the receiver, and reduce the noise component in the signal.

Also, a speech sound parameter code whose sampling rate is 8 kHz is recorded into a memory 130, and reproduced as a wide-band speech sound whose sampling rate is 16 kHz, so the recording can be done with a small capacity and a quality speech sound can be reproduced.

Note that although in the receiver and mobile telephone, a semiconductor memory is used as the recording medium to record the speech sound parameter code, the recording medium may be any other type one such as magnetic tape or the like.

Further note that although in the receiver and mobile telephone, the speech sound parameter code is recorded in a dedicated memory 13 and a memory 130, the memory in the controller or signal processor may be commonly used for recording the speech sound parameter code according to the present invention.

In the foregoing, it has been described that the receiver, transmitter and mobile telephone as the embodiments of the present invention can be applied to a digital mobile telephone used as PDC. However, they are also applicable to a wide-band CDMA system, namely, a mobile communication system using a wide speech frequency band.

## Claims

1. A receiving apparatus, comprising:

   a sampling rate converting means for converting a sampling rate $f_{s1}$ of a speech sound signal whose speech frequency is included in a first band $B_1$ produced from a speech sound parameter code based on a signal transmitted from a transmitter to produce the speech sound signal of the first sampling rate $f_{s1}$, to a second sampling rate $f_{s2}$ ($f_{s2} > f_{s1}$), and

an out-of-band component predicting means for predicting, based on the speech sound parameter code, a speech sound signal of the second sampling rate $f_{s2}$, having a speech frequency included in a second band $B_2$ being a component outside the first band $B_1$.

2.  The receiving apparatus as set forth in Claim 1, further comprising:

    an adding means for adding the speech sound signal having a speech frequency included in the first band $B_1$, made by the sampling rate converting means to be sampled at the second sampling rate $f_{s2}$, and the speech sound signal having a speech frequency included in the second band $B_2$ of the second sampling rate $f_{s2}$, predicted by the out-of-band component predicting means, to provide a speech sound signal having a speech frequency included in a wide band $B_W$.

3.  The receiving apparatus as set forth in Claim 2, further comprising:

    a noise reducing means for reducing the noise of the addition output from the adding means.

4.  The receiving apparatus as set forth in Claim 3, wherein the noise reducing means forms a control signal according to a noise level in a background noise component detected from the speech sound parameter code based on a signal transmitted from the transmitter to produce the speech sound signal of the first sampling rate $f_{s1}$, and applies the noise reduction based on the control signal to the addition output.

5.  The receiving apparatus as set forth in Claim 4, wherein the noise reducing means forms a control signal according to a noise level in a background noise component detected from the speech sound parameter code based on a signal transmitted from the transmitter to produce the speech sound signal of the first sampling rate $f_{s1}$, and repeats the noise reduction based on the control signal $f_{s2}/f_{s1}$ times.

6.  The receiving apparatus as set forth in Claim 2, further comprising:

    a post-filtering means for post-filtering of the addition output from the adding means.

7.  The receiving apparatus as set forth in Claim 6, wherein the post-filtering means repeats the post-filtering of the addition output $f_{s2}/f_{s1}$ times according to the speech sound parameter code based on a signal transmitted from the transmitter to produce the speech sound signal of the first sampling rate $f_{s1}$.

8.  The receiving apparatus as set forth in Claim 7, wherein the post-filtering means comprises:

    a spectrum shaping filter means supplied with a decoded signal and whose filter factor is updated at a first period; and
    a gain controlling means supplied with an output from the spectrum shaping means and whose gain is updated at a second period different from the first period.

9.  The receiving apparatus as set forth in Claim 8, wherein the post-filtering means sets the second period longer than the first period.

10. The receiving apparatus as set forth in Claim 2, further comprising:

    means for selecting one of the speech sound signal having a speech frequency included in the band $B_1$, made by the sampling rate converting means to be sampled at the second sampling rate $f_{s2}$, and the speech sound signal having a speech frequency included in the wide band $B_W$, provided from the adding means.

11. The receiving apparatus as set forth in Claim 10, wherein the selecting means selects one of the speech sound signals of the first sampling rate $f_{s1}$, having speech frequencies included in the first band $B_1$ and produced from the speech sound parameter code.

12. The receiving apparatus as set forth in any one of the preceding claims, further comprising:

    a recording medium for storing a speech sound parameter code based on the signal transmitted from the transmitter;
    the speech sound signal included in the first band $B_1$ being produced using the speech sound parameter code stored in the recording medium.

13. The receiving apparatus as set forth in any one of the preceding claims, wherein the out-of-band

component predicting means consists of:

a part for widening the band of a linear predictive residual as the speech sound parameter code; and
a part for widening the band of the linear predictive filter factor to the wide band.

14. The receiving apparatus as set forth in Claim 13, wherein the part for widening the band of the linear predictive filter factor to the wide band comprises:

a first converter to convert the linear predictive filter factor to an autocorrelation;
an autocorrelation frequency band widening means for widening the band of the autocorrelation from the first converter referring to a code book having previously stored autocorrelations in the wide band; and
a second converter to convert the band-widened autocorrelation from the autocorrelation frequency band widening means to a band-widened linear predictive filter factor.

15. The receiving apparatus as set forth in Claim 13, wherein the linear predictive residual band widening part comprises:
an up-sampling circuit to up-sample the linear predictive residual.

16. The receiving apparatus as set forth in any one of the preceding claims, wherein the transmission signal is a PSI-CELP-coded or VSELP-coded signal; and
the out-of-band component predicting means uses the speech sound parameter code produced by decoding the PSI-CELP-coded or VSELP-coded signal to the speech sound signal of the second sampling rate $f_{s2}$, having a speech frequency included in the second band $B_2$ being a component out of the first band $B_1$.

17. A receiving method, comprising the steps of:

converting means for converting a sampling rate $f_{s1}$ of a speech sound signal whose speech frequency is included in a first band $B_1$, produced from a speech sound parameter code based on a signal transmitted from a transmitter to produce the speech sound signal of the first sampling rate $f_{s1}$, to a second sampling rate $f_{s2}$ $(f_{s2} > f_{s1})$; and
predicting, based on the speech sound parameter code, a speech sound signal of the second sampling rate $f_{s2}$, having a speech frequency included in a second band $B_2$ being a component outside the first band $B_1$.

18. A communicating apparatus, comprising:

a transmitting means for encoding an input speech sound signal with a first sampling rate $f_{s1}$ to produce a signal for transmission; and
a receiving means for producing a speech sound signal of a second sampling rate $f_{s2}$ $(f_{s2} > f_{s1})$ from a speech sound parameter code based on the transmission signal produced by encoding with the first sampling rate $f_{s1}$.

19. The communicating apparatus as set forth in Claim 18, wherein the receiving means comprises:
a sampling rate converting means for converting a sampling rate $f_{s1}$ of a speech sound signal having a speech frequency included in a first band $B_1$, produced from a speech sound parameter code based on a signal transmitted to produce the speech sound signal of the first sampling rate $f_{s1}$, to a second sampling rate $f_{s2}$ $(f_{s2} > f_{s1})$; and
means for predicting, based on the speech sound parameter code, a speech sound signal of the second sampling rate $f_{s2}$ having a speech frequency included in a second band $B_2$ being a component out of the first band $B_1$.

20. The communicating apparatus as set forth in Claim 19, wherein the receiving means comprises an adding means for adding the speech sound signal having a speech frequency included in the first band $B_1$, made by the sampling rate converting means to be sampled at the second sampling rate $f_{s2}$, and the speech sound signal of the second sampling rate $f_{s2}$, having a speech frequency included in the second band $B_2$ and predicted by the out-of-band component predicting means.

21. The communicating apparatus as set forth in Claim 19 or 20, wherein the out-of-band component predicting means consists of:

a part for widening the band of a linear predictive residual as the speech sound parameter code; and
a part for widening the band of the linear predictive filter factor to the wide band.

**22.** The communicating apparatus as set forth in Claim 21, wherein the part for widening the band of the linear predictive filter factor to the wide band comprises:

a first converter to convert the linear predictive filter factor to an autocorrelation;
an autocorrelation frequency band widening means for widening the band of the autocorrelation from the first converter referring to a code book having previously stored autocorrelations in the wide band; and
a second converter to convert the band-widened autocorrelation from the autocorrelation frequency band widening means to a band-widened linear predictive filter factor.

**23.** The communicating apparatus as set forth in Claim 21, wherein the linear predictive residual band widening part comprises:
an up-sampling circuit to up-sample the linear predictive residual.

**24.** The communicating apparatus as set forth in any one of Claims 19 to 23, wherein the transmission signal is a PSI-CELP-coded or VSELP-coded signal; and
the out-of-band component predicting means uses the speech sound parameter code produced by decoding the PSI-CELP-coded or VSELP-coded signal to the speech sound signal of the second sampling rate $f_{s2}$, having a speech frequency in the second band $B_2$ being a component out of the first band $B_1$.

**25.** A communication method, comprising the steps of:

encoding an input speech sound signal with a first sampling rate $f_{s1}$ to produce a signal for transmission; and
predicting, based on a speech sound parameter code based on the transmission signal produced by encoding with the first sampling rate $f_{s1}$, a speech sound signal of a second sampling rate $f_{s2}$, having a speech frequency included in the second band $B_2$ being a component outside the first band $B_1$.

FIG.1

EP 1 008 984 A2

## FIG.2

**15**

MICROPHONE **16** → AMPLIFIER **17** → VARIABLE RESISTOR **18** → ANTI-ALIASING FILTER **19** → A/D CONVERTER **20** → SIGNAL PROCESSOR **21** (MEMORY **21a**)

KEY **25** → CONTROLLER **22** ← → RF **23** → **24**

LCD **26** ←

## FIG.3

**26** → PSI-CELP DECODER **27** →

**29 28** DECODED SPEECH SOUND $Snd_N$

LINEAR PREDICTIVE FACTOR $\alpha_N$

**30** EXCITATION SOURCE $NExc_N$

FIG.4

41

50　51　52

35 ○→ UP-SAMPLING → LPF → BOOSTING →○ 55

53 ○ rN → AFFRICATE DETECTION

54

# FIG.5

141 ○

145 → NOISE REDUCTION →○ 146

FRAME POWER (rms) CALCULATION → SCALE CALCULATION → SMOOTHING

142　143　144

LEVEL DISCRIMINATION

147

148 ○

# FIG.6

S2

PSI-CELP-
DECODED
SPEECH SOUND

α

EXCITATION
SOURCE

S1

α→
AUTOCORRELATION

V OR UV ?

S3

S7

ZERO FILLING

COMPARISON
AT EVERY
OTHER ORDERS

QUANTIZATION
WITH V(UV) CB

S4

WIDE-BAND
V(UV) CB

DEQUANTIZATION
WITH V(UV) CB

S5

S10

AUTOCORRELATION→
α

S6

UP-
SAMPLING

LPC
SYNTHESIS

S8

REMOVAL OF NARROW-BAND
FREQUENCY COMPONENT

S9

S11

SUPPRESSION OF HIGH-
FREQUENCY BAND
COMPONENT

FILTER
FACTOR

S12

✕

GAIN

S13

+

WIDE-BAND SPEECH SOUND

# FIG.7

26

FIG.8

WIDE-BAND V (UV) r FRAME

↓

EXTRACTION OF WIDE-BAND PARAMETER — S41

↓

LEARNING OF WIDE-BAND CB — S42

↓

WIDE-BAND V (UV) CB

# FIG.9

57 — 58 — 60 59

VSELP DECODER

○ DECODED SPEECH SOUND $Snd_N$
○ LINEAR PREDICTIVE FACTOR $\alpha_N$
○ EXCITATION SOURCE 1 $Exc_{N1}$
○ EXCITATION SOURCE 2 $Exc_{N2}$

61 62

# FIG.10

EP 1 008 984 A2

FIG.11

EP 1 008 984 A2

VCELP-
DECODED
SPEED SOUND

α

S81 —
AUTOCORRELATION

S82
V OR UV ?

S83
COMPARISON
AT EVERY
OTHER ORDERS

S84
QUANTIZATION
WITH V(UV) CB

WIDE-BAND
V(UV) CB

S85
QUANTIZATION
WITH V(UV) CB

S92
UP-
SAMPLING

S86
AUTOCORRELATION→
α

S90
LPC
SYNTHESIS

S91
REMOVAL OF MARROW-BAND
FREQUENCY COMPONENT

S93
SUPPRESSION OF HIGH
FREQUENCY COMPONENT

FILTER
FACTOR

S94
×

GAIN

S95
+

WIDE-BAND SPEED SOUND

EXCITATION
SOURCE 1

EXCITATION
SOURCE 1

S87
FRAME
ENERGY,
EXCITATION SOURCE 1>
EXCITATION
SOURCE 2
?

YES

S88
SAMPLED
VALUE OF EXCITATION
SOURCE 1, LARGER THAN
PREDETERMINED
?

YES

NO

SAMPLED VALUE
OF EXCITATION
SOURCE 1

ZERO

NO

ZREO FILLING — S89

SAMPLED VALUE OF
EXCITATION SOURCE 1+
SAMPLED VALUE OF
EXCITATION SOURCE 2

**FIG.12**

FIG.13

33 DECODED SPEECH SOUND Snd_N

34 LINEAR PREDICTIVE FACTOR α_N

36 α_N → r_N

37 r BAND WIDENING

38 r_W CB

39 r_W → α_W

40 LPC SYNTHESIS

42 HIGH-FREQUENCY BAND COMPONENT EXTRACT AND SUPPRESS FILTER

43 ×

44

45 UP-SAMPLING

46 +

47 NOISE REDUCTION (a)

48 NOISE REDUCTION (b)

49 NOISE REDUCTION (C)

150

6 D/A

6a

151

35 EXCITATION SOURCE Exc_N

41 EXCITATION SOURCE 2 Exc_N2 BAND WIDENING

PSI-CELP

68 EXCITATION SOURCE 1 Exc_N1 EXCITATION SOURCE SELECTION AND BAND WIDENING

VSELP

66 67 71

70

a b c d

EP 1 008 984 A2

**FIG.14**

**FIG.15**

EP 1 008 984 A2

**FIG.16**

FIG.17

FILTER FACTOR
UPDATING

20 SAMPLES (2.5msec)

1 FRAME, 160 SAMPLES (20msec)

GAIN UPDATING

FIG.18

**FIG.19**

EP 1 008 984 A2